# EUROPEAN PATENT APPLICATION

(11) **EP 2 620 995 A1**
(43) Date of publication of application: **31.07.2013**
(21) Application number: 11826781.4
(22) Date of filing: 14.09.2011
(51) Int. Cl.: H01M 2/10, H01M 2/20, H01M 10/48

(54) **BATTERY MODULE AND BATTERY SYSTEM**

(30) Priority: 22.09.2010 JP 2010212227
(71) Applicant: Mitsubishi Heavy Industries, Ltd., Tokyo 108-8215 (JP)
(72) Inventor: OYA Takumi, Tokyo 108-8215 (JP)
(74) Representative: HOFFMANN EITLE
(86) International application number: PCT/JP2011/070991
(87) International publication number: WO 2012/039335

(57) **Abstract**

A battery module of the present invention includes: a battery cell (2) having electrode terminals (21 and 22); first holding bodies (4 and 5), which surrounds and holds the battery cell (2), having hole portions (53a and 53b) to pass through the electrode terminals (21 and 22); and a second holding body (6) which is attachably and detachably connected to the first holding bodies (4 and 5) with a predetermined space at the opposite side to the electrode terminals (21 and 22) of the battery cell (2).

## Description

### Field of the Invention

The present invention relates to a battery module and a battery system.
Priority is claimed on Japanese Patent Application No. 2010-212227, filed on September 22, 2010, the content of which is incorporated herein by reference.

### Background Art

A battery system which is represented as an electric vehicle includes an assembled battery with a plurality of battery cells and a control system monitoring and managing an operation status such as a charged and discharged status of the assembled battery.
The control system includes a CMU (Cell Monitoring Unit), which is connected to the plurality of battery cells, monitors the operation status of the battery cells and a BMU (Battery Management Unit) which manages the operation of the CMU.

In recent years, a system which detects a charged status of a plurality of battery cells connected in serial to each other has been proposed (see Patent Document 1). In Patent Document 1, the CMU is provided for each cell group and monitors the operation status of the plurality of battery cells which constitute the cell group. The plurality of CMUs are connected in parallel to the BMU.

### Citation List

### [Prior Art Document]

[Patent Document 1] Japanese Patent Application, Laid-Open No. 2003-032907

### Summary of the Invention

### Problem to be Solved by the Invention

The battery cells are assembled to a desired battery system. In this case, an accident may happen in which the battery cells are dropped by mistake when the battery cells are delivered for the assembly work. Accordingly, there is a need to protect the battery cells from the impact which is generated by the unexpected drop.
Further, the number of the battery cells which constitute the assembled battery may be variously set depending on the requirements in the battery system. Accordingly, it is desirable that the scalability of the battery cell, which constitutes the assembled battery, is high and that the assembly or the maintenance of the battery cell is easily carried out regardless of the specification of the battery system.

The present invention is made in view of the above-described circumstances, and it is an object of the present invention to provide a battery module and a battery system capable of effectively protecting a battery cell from an impact caused by dropping or the like and efficiently carrying out the assembly or the maintenance of an assembled battery regardless of the total number of the battery cells required in the battery system.

### Means for solving the Problem

A battery module of the present invention includes: a battery cell of which a first surface is provided with an electrode terminal; a first holding body, which surrounds and holds the battery cell, having a hole portion to pass through the electrode terminal ; and a second holding body attachably and detachably connected to the first holding body with a predetermined space at the opposite side to the electrode terminal of the battery cell.

In this way, since the battery cell is held by being surrounded by the first holding body, an impact is reduced by the first holding body even in the event of an unexpected drop, so that the battery cell may be effectively protected. Further, the second holding body, which is attachably and detachably connected to the first holding body, is disposed with the predetermined space. Accordingly, the predetermined space may be meaningfully used as, for example, a space which cools the battery cell or a space which accommodates the monitoring unit monitoring the battery cell.

Further, a battery system of the present invention is formed by arranging a plurality of the battery modules or the battery modules further including a monitoring unit corresponding to the battery cell with a one-to-one correspondence and to monitor the battery cell, wherein the holding body is provided with a measuring device that measures measurement information measured from the battery cell and a first interconnection group that is electrically connected to the measuring device, and wherein the second holding body holds the monitoring unit and is provided with a second interconnection group that is electrically connected to the first interconnection group and the monitoring unit. Here, a metal plate of which at least a part protrudes outward from the battery module and which contacts the battery cell is disposed in the inside of the first holding body of each of the battery modules, and parts of the metal plate, which protrude outward, contact each other between the adjacent battery modules.

### Effects of the Invention

According to the present invention, it is possible to effectively protect the battery cell by reducing the impact using the first holding body even in the event of an unexpected drop. Further, it is possible to realize the battery module, which has excellent scalability by meaningfully using the predetermined space through the second holding body attachably and detachably connected to the first holding body, and the battery system which includes the battery module.

### Brief Description of Drawings

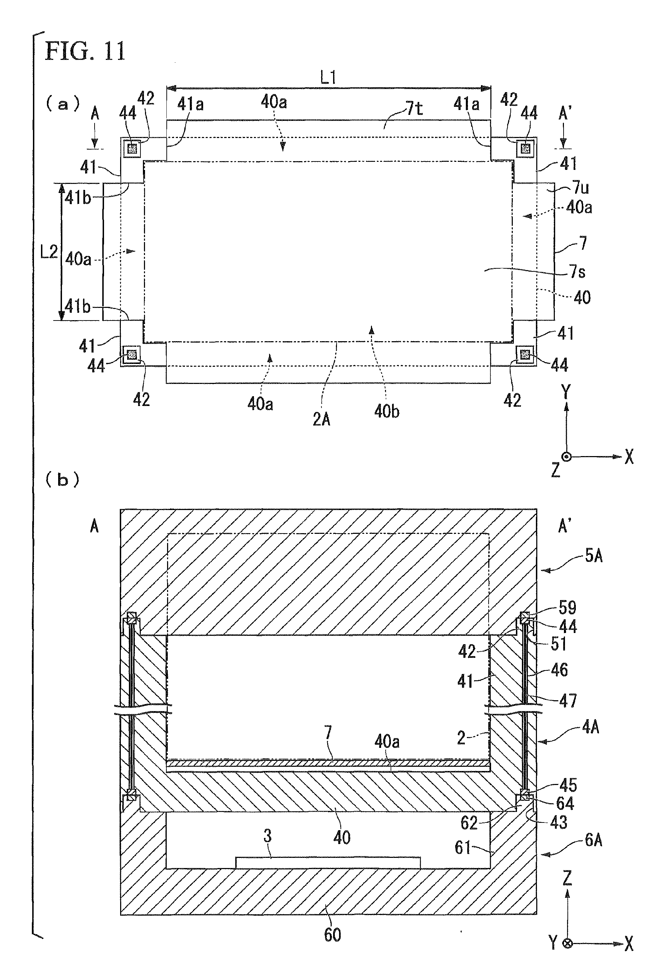

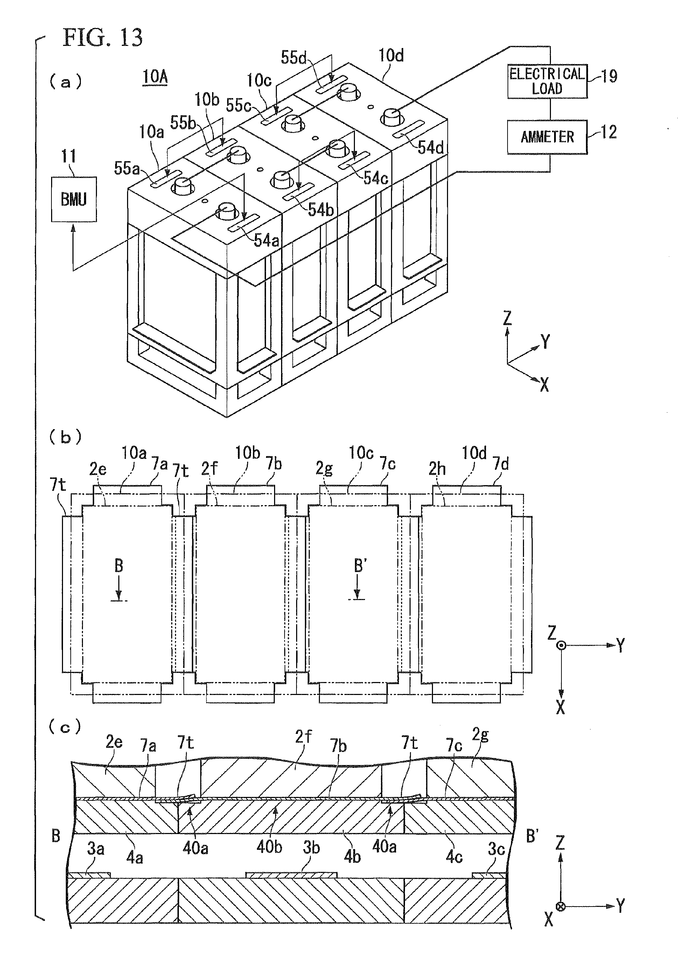

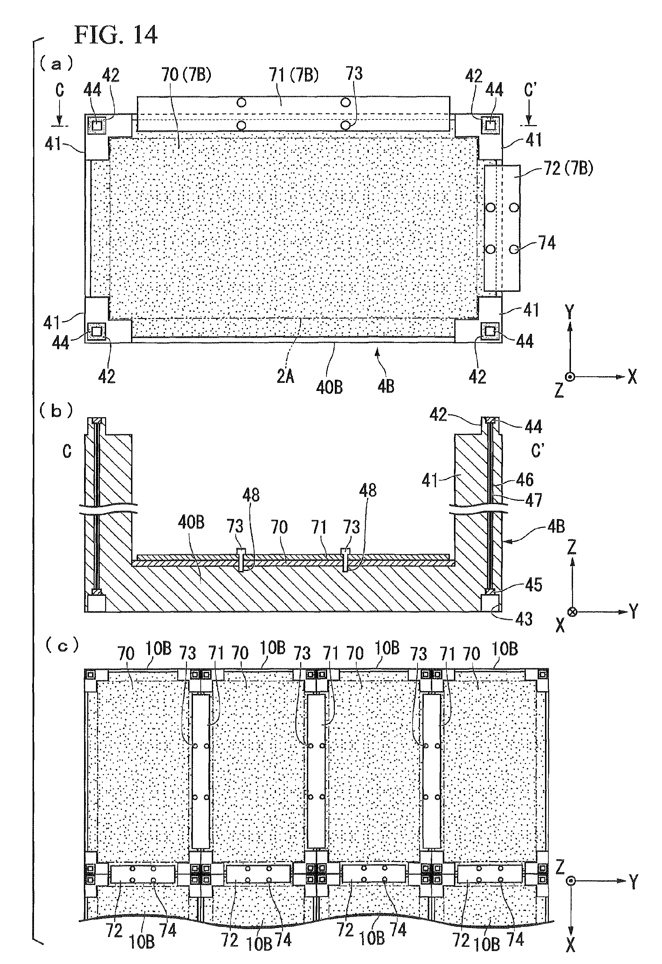

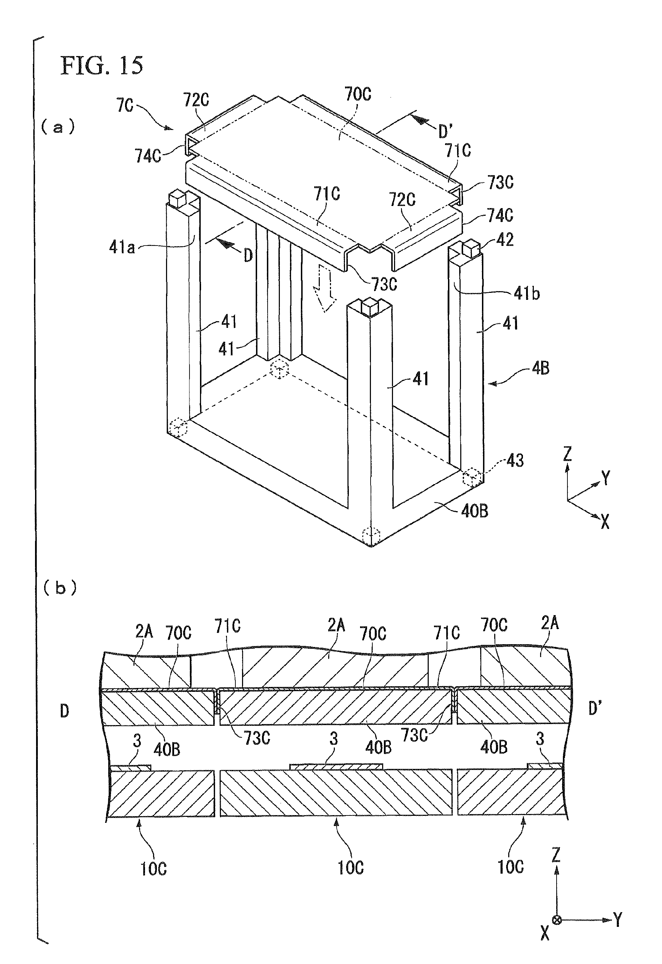

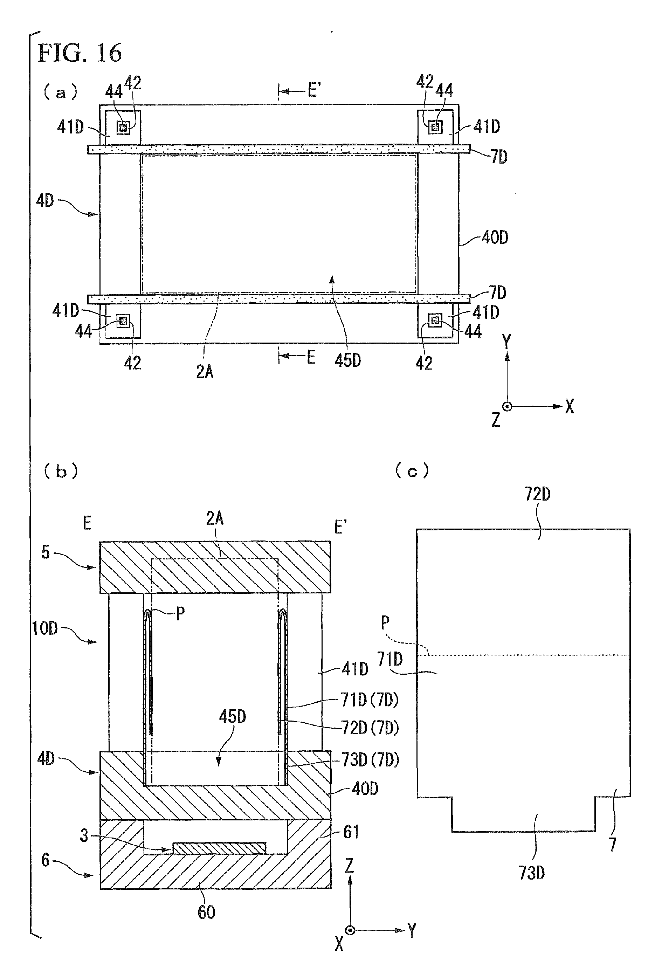

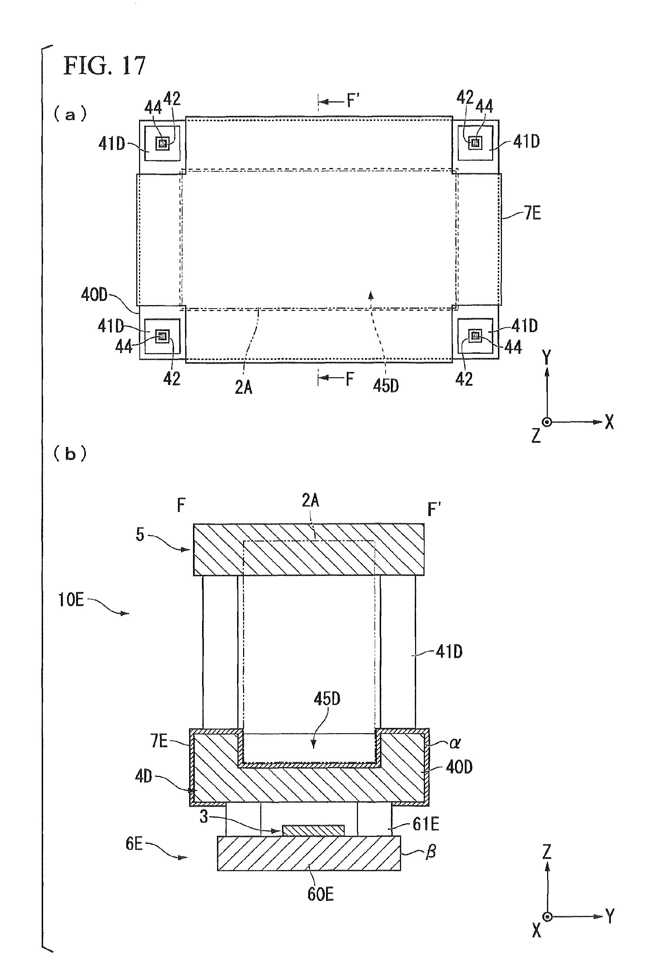

FIG. 1 is a diagram illustrating a configuration example of a battery system of a first embodiment.
FIG. 2 is a perspective view illustrating an overview of a battery module which constitutes the battery system of the first embodiment.
FIG. 3 is an exploded perspective view illustrating a schematic configuration of the battery module which constitutes the battery system of the first embodiment.
FIG. 4 is an exploded perspective view illustrating a configuration of a battery cell and a cap in the battery module which constitutes the battery system of the first embodiment.
FIG. 5 is an exploded perspective view illustrating a configuration of a frame and a second holding body in the battery module which constitutes the battery system of the first embodiment.
FIG. 6 is a diagram illustrating a configuration example of a battery system of a second embodiment.
FIG. 7 is a perspective view illustrating an overview of a battery module which constitutes the battery system of the second embodiment.
FIG. 8 is an exploded perspective view illustrating a schematic configuration of the battery module which constitutes the battery system of the second embodiment.
FIG. 9 is an exploded perspective view illustrating a configuration of a battery cell and a cap in the battery module which constitutes the battery system of the second embodiment.
FIG. 10 is an exploded perspective view illustrating a configuration of a frame and a CMU holding body in the battery module which constitutes the battery system of the second embodiment.
Section (a) of FIG. 11 is a plan view illustrating a frame and a metal plate in the battery module which constitutes the battery system of the second embodiment, and section (b) of FIG. 11 is a cross-sectional view illustrating the battery module when taken along the line A-A' of section (a) of Fig. 11.

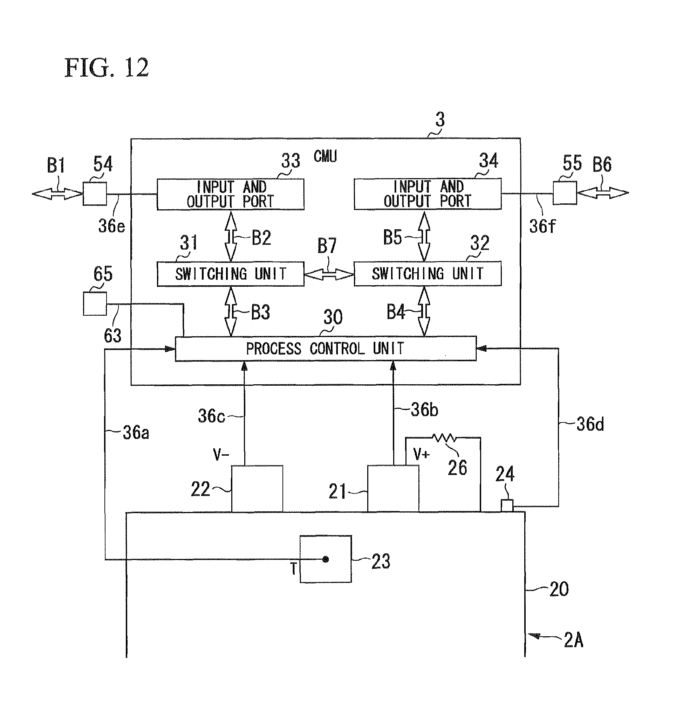

FIG. 12 is a diagram illustrating an electrical connection relationship in the battery system of the second embodiment.
Section (a) of FIG. 13 is a schematic diagram illustrating an electrical connection relationship between a plurality of arranged battery modules in the battery module which constitutes the battery system in the second embodiment, section (b) of FIG. 13 is a plan view illustrating a connection relationship of a metal plate, and section (c) of FIG. 13 is a cross-sectional view taken along the line B-B' of section (b) of FIG. 13.
Section (a) of FIG. 14 is a plan view illustrating a frame and a metal plate of Modified Example 1 in the battery module which constitutes the battery system in the second embodiment, section (b) of FIG. 14 is a cross-sectional view taken along the line C-C' of section (a) of FIG. 14 and section (c) of FIG. 14 is a schematic diagram illustrating an arrangement example of the battery module of Modified Example 1.
Section (a) of FIG. 15 is a perspective view illustrating a frame and a metal plate of Modified Example 2 in the battery module which constitutes the battery system of the second embodiment and section (b) of FIG. 15 is a cross-sectional view illustrating the battery module when taken along the line D-D' of section (a) of FIG. 15.
Section (a) of FIG. 16 is a plan view illustrating a frame and a metal plate of Modified Example 3 in the battery module which constitutes the battery system of the second embodiment, section (b) of FIG. 16 is a cross-sectional view taken along the line E-E' of section (a) of FIG. 16 and section (c) of FIG. 16 is an exploded diagram illustrating the metal plate of Modified Example 3.
Section (a) of FIG. 17 is a plan view illustrating a frame and a metal plate of Modified Example 4 in the battery module which constitutes the battery system of the second embodiment and section (b) of FIG. 17 is a cross-sectional view taken along the line F-F' of section (a) of FIG. 17.

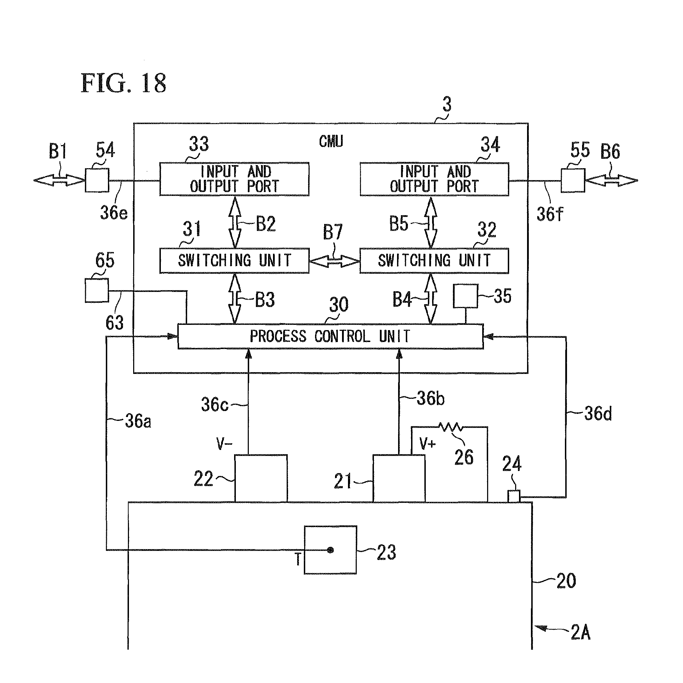

FIG. 18 is a diagram illustrating an electrical connection relationship between a CMU and a battery system of Modified Example 5 in the battery system of the second embodiment.

### Description of Embodiments

Hereinafter, embodiments of the present invention will be described by referring to the drawings. In the drawings used for description, the dimensions or the scales of the structures of the drawings may be different from those of the actual structures so that the characteristic points are easily understood. The same reference numerals will be given to the same components of the embodiments, and the detailed description thereof will be omitted. All components which are described in the embodiments may not be essentially needed in the present invention.

### <First embodiments

Hereinafter, a battery module and a battery system according to a first embodiment of the present invention will be described.

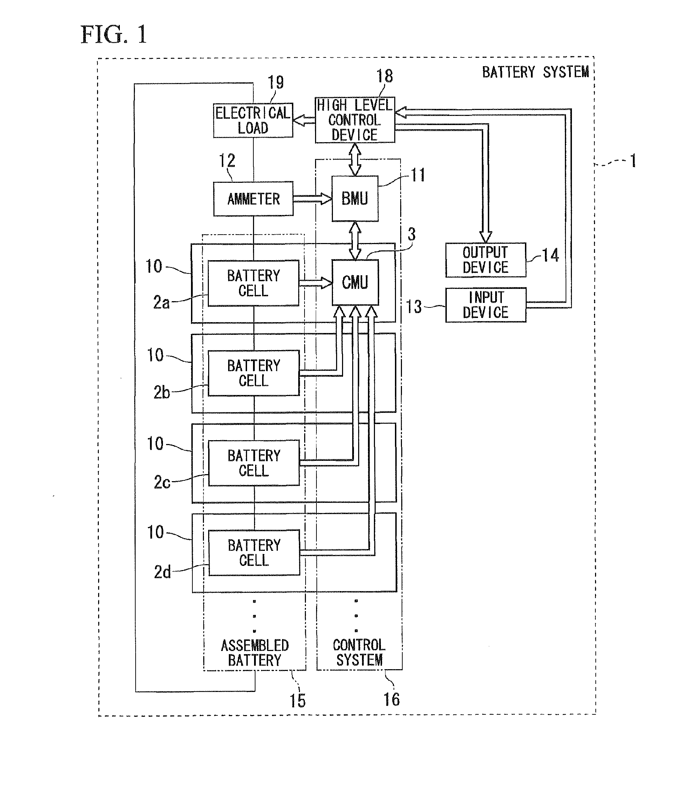

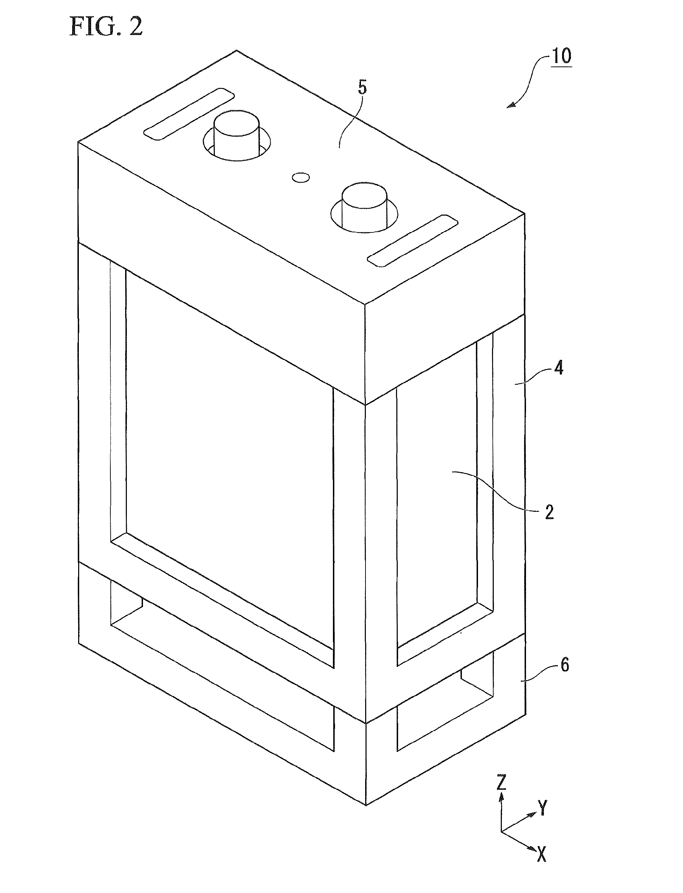

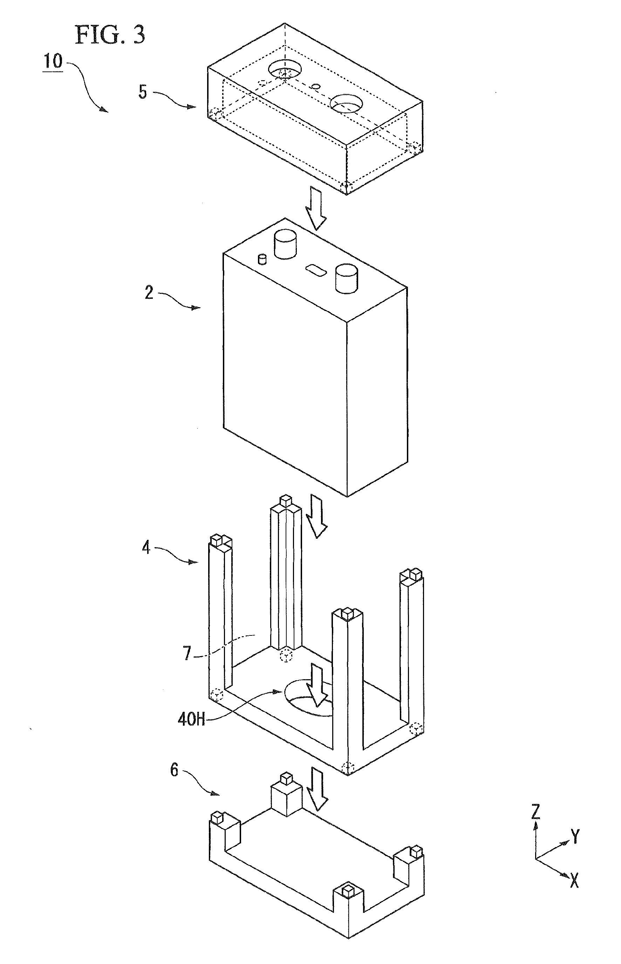

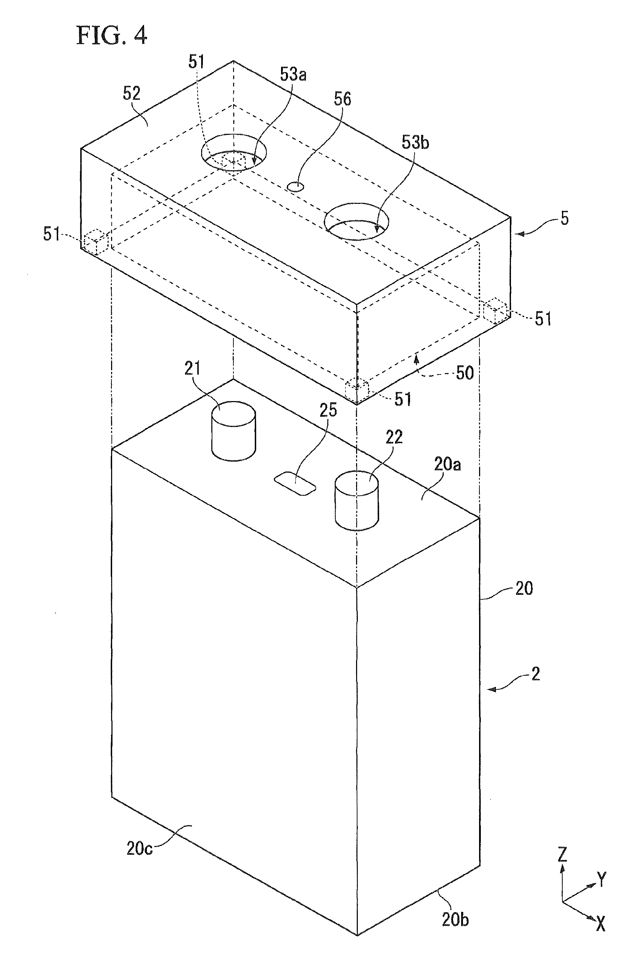

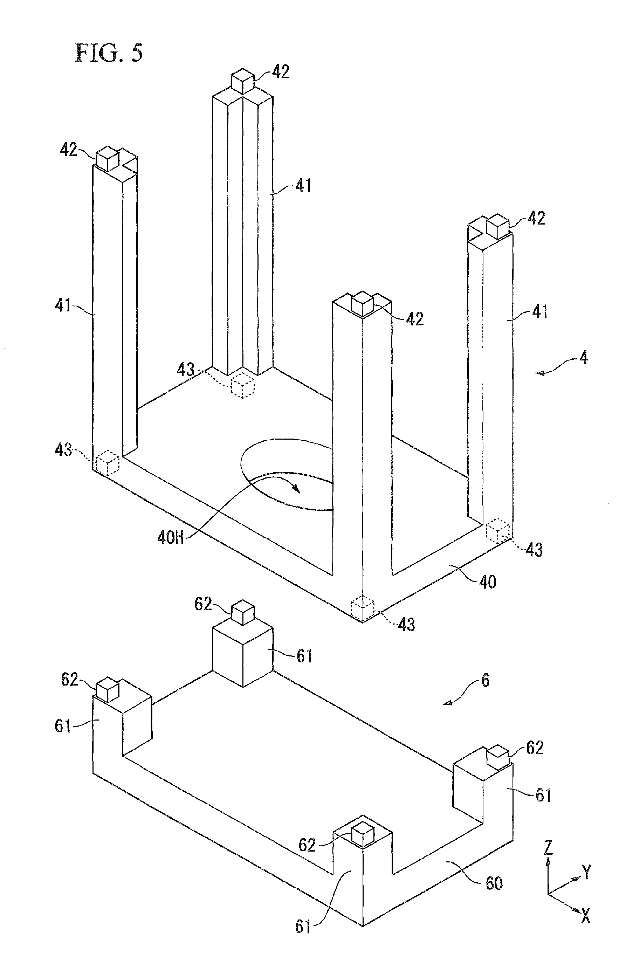

FIG. 1 is a diagram illustrating a configuration example of a battery system of a first embodiment, FIG. 2 is a perspective view illustrating a battery module which is included in the battery system according to the present invention, and FIG. 3 is an exploded perspective view illustrating a schematic configuration of the battery module which constitutes the battery system of the first embodiment. Further, FIG. 4 is an exploded perspective view illustrating a configuration of a battery cell and a cap in the battery module which constitutes the battery system of the first embodiment, and FIG. 5 is an exploded perspective view illustrating a configuration of a frame and a second holding body in the battery module which constitutes the battery system of the first embodiment.
Furthermore, in the following description, the Z direction indicates a direction in which a second holding body 6, a frame 4, and a cap 5 are stacked, and the positive side of the Z direction is defined as a direction in which the second holding body 6, the frame 4, and the cap 5 are stacked in this order. The X direction and the Y direction will be defined later.

As shown in FIG. 1, a battery system 1 of the embodiment includes an assembled battery 15 which includes a plurality of battery cells 2 (battery cells 2a to 2d), a control system 16 which includes a CMU 3 and a BMU 11, a current sensor 12, an input device 13, an output device 14, an upper level control device 18, and an electrical load 19.
The battery system 1 is, for example, an industrial vehicle, an electric vehicle, a hybrid vehicle, a train, a ship, an airplane, an electrical power generating system, or the like, and generally corresponds to a system which is driven by the electrical power supplied from a battery cell. In the following description, an electric vehicle will be exemplified as the battery system 1.
Further, in the embodiment, a battery module 10 includes battery cells 2 (battery cells 2a to 2d) which are accommodated in a case formed by a cap 5, a frame 4, and a second holding body 6 to be described later. Among these, with regard to the battery cell 2a, the CMU 3 is accommodated in the second holding body 6, and the respective battery cells 2 (the battery cells 2a to 2d) are electrically connected to the CMU 3 through interconnections (not shown). That is, in the embodiment, four battery cells 2 are connected to one CMU 3, and the CMU 3 monitors the respective battery cells 2 based on measurement information such as a voltage across the terminals of the respective battery cells 2 or a can potential of the respective battery cells 2 (which will be described in detail). Furthermore, the CMU 3 obtains electrical power which is necessary for the driving from the battery cells 2 through an interconnection group to be described later (the same applies to the other embodiments or the modified examples).
In this way, the battery module of the embodiment includes at least the case and the battery cells accommodated therein, and if necessary, the CMU may be additionally provided. Then, since the battery module 10 relating to the battery cell 2a holds the CMU 3, the battery cell 2a may adopt the configuration of the battery module 10A described in a second embodiment.

The CMU 3, which serves as a monitoring unit, receives the measurement information of the battery cells 2a to 2d which are monitored objects from various sensors. More specifically, the CMU 3 includes an ADC (Analog Digital Converter) which is not shown in the drawings, where a plurality of measurement information, which are detected and output from the various sensors, are input as analog signals to the ADC, the analog signals are converted into corresponding digital signals by the ADC, and then the digital signals are output to the BMU 11 as parameter information for calculating related information to be described later. The CMU 3 is electrically connected to the BMU 11 to be described later through a bus which transmits and receives data.
The BMU 11 which serves as a managing unit is connected to the CMU 3 and the upper level control device 18 through a bus which transmits and receives data, and performs a control so that the supply of electrical power to the electrical load 19 is started or stopped in response to the command of the upper level control device 18. Further, the BMU 11 calculates related information (which is information relating to the measurement information and includes an SOC (State of Charge) or an SOH (State of Health) of each battery cell 2 calculated in the BMU 11) together with the CMU 3 based on a value of current flowing to the assembled battery 15 measured by the current sensor 12 to be described later or the measurement information output from various sensors.

The current sensor 12 is an electrical meter which includes an ADC (not shown) and measures a current output from the assembled battery 15 to the electrical load 19. The current sensor 12 is connected to the BMU 11 through a bus which transmits data, and transmits parameter information corresponding to the measured current value to the BMU 11. Furthermore, when the ADC is not installed in the current sensor 12, the BMU 11 may be equipped with the ADC so as to generate the parameter information. Alternatively, the current sensor 12 and the CMU 3 may be connected to each other through a bus, and the parameter information corresponding to the current output from the assembled battery 15 to the electrical load 19 may be generated using the ADC of the CMU 3.
The input device 13 is a device through which a user inputs a command of outputting the related information of the battery cells 2a to 2d. As the input device 13, for example, a switch, a touch panel, or the like which is installed around an instrument panel of an electric vehicle may be supposed. The input device 13 is connected to the upper level control device 18 through a bus which transmits data.
The output device 14 is a device which outputs the related information of the battery cells 2a to 2d in terms of vision or sound. The output device 14 may be an instrument panel, a car navigation monitor, a speaker, or the like which is installed in an electric vehicle. The output device 14 is connected to the upper level control device 18 through a bus which receives data. Furthermore, as a method of outputting related information using the output device 14, the related information in the battery cells 2a to 2d may be individually output, and the related information may be output from the entire assembled battery 15. When the related information of each of the battery cells 2a to 2d is individually output, it is possible to easily recognize which battery cell needs to be replaced and replace each battery cell at an appropriate timing. On the other hand, when the related information is output from the entire assembled battery 15, the user of the electric vehicle may simply recognize the SOH of the entire battery system 1.

The upper level control device 18 is a control device such as an ECU (Electronic Control Unit) which is mounted on an electric vehicle serving as the battery system 1. The upper level control device 18 is connected to each of the input device 13, the output device 14, the BMU 11, and the electrical load 19 through a bus, and performs the control of the entire battery system 1 including the control of the electrical load 19. Further, the upper level control device 18 performs control so that the related information corresponding to the SOC of, for example, the assembled battery 15 is output from the output device 14 based on the command which is input from the user of the electric vehicle through the input device 13. In the specification, the upper level control device 18 and the control system 16 may be referred to as a "control device". The control device may calculate the related information and output the related information from the output device 14, where the calculation of the related information may be performed in the upper level control device 18.
The electrical load 19 is a system or a device which is operated by the electrical power supplied from the assembled battery 15. For example, in the case of the electric vehicle, an electrical machinery (an electric motor or the like) which is operated by the electrical power supplied from the assembled battery 15 is exemplified.
Furthermore, as the connection of the battery cells 2a to 2d in the assembled battery 15, any one of the serial connection, the parallel connection, and the combination of the serial connection and the parallel connection may be used. In the embodiment, the battery cells 2a to 2d are connected in series to each other.

Next, the battery module 10 of the embodiment will be described.
As shown in FIGS. 2 and 3, the battery module 10 of the embodiment includes the battery cell 2, a first holding body (referred to as a "cell holding body") which includes the cap 5 and the frame 4 and holds the battery cell 2 so that the battery cell is surrounded, and a second holding body 6 which is attachably and detachably connected to the first holding body.
Hereinafter, the respective components of the battery cell 2, the cap 5, the frame 4, and the second holding body 6 which constitute the battery module 10 of the embodiment will be described.
The battery cell 2 is a storage cell which supplies electrical power to the electrical load 19 to be described later. The battery cell 2 is able to be charged and discharged, and includes at least a container body 20, a positive electrode terminal 21 serving as an electrode terminal, a negative electrode terminal 22 serving as an electrode terminal, and a safety valve 25 as shown in FIG. 4. Further, various sensors (measuring devices), which measure measurement information such as a temperature and a voltage, are attached to the battery cell 2. The parameter information corresponding to the measurement information which is measured by and output from various sensors is input to the BMU 11 through the CMU 3. In the specification, a lithium ion secondary battery has been exemplified as the battery cell 2. Other secondary batteries such as a lead battery may be also used.
The container body 20 is formed by insulating, for example, an outer surface of a hollow container formed of aluminum through an alumite treatment, painting, or the like, and the outer shape is substantially formed in a regular hexahedron shape. The outer surface of the container body 20 includes a top surface 20a, a bottom surface 20b, and four side surfaces 20c. The scope of application example of the present invention is not limited to the shape, the dimensions, and the material of the container body 20. For example, the outer shape of the container body 20 may be substantially formed in a cylindrical shape.
A positive electrode plate and a negative electrode plate (not shown), which are disposed with a separator interposed between them, are accommodated inside the container body 20, and an electrolytic solution is accumulated in the container body 2- so as to contact the positive electrode plate and the negative electrode plate. The positive electrode terminal 21 and the negative electrode terminal 22 protrude from the top surface 20a of the battery cell 2 toward the outside of the battery cell 2. Furthermore, in the embodiment, an example has been illustrated in which the positive electrode terminal 21 and the negative electrode terminal 22 protrude from the top surface 20a, but the present invention is not limited to this example. For example, the positive electrode terminal 21 and the negative electrode terminal 22 may protrude from the respective two facing side surfaces 20c.
The electrical power is transmitted between the inside and the outside of the battery cell 2 through the positive electrode terminal 21 and the negative electrode terminal 22. The positive electrode terminal 21 is electrically connected to the positive electrode plate, and the negative electrode terminal 22 is electrically connected to the negative electrode plate.
The safety valve 25 is installed in the top surface 20a of the container body 20, and opens the internal pressure of the container body 20 to the outside when the internal pressure of the container body 20 increases to a predetermined value or more. Furthermore, when a plurality of the battery modules 10 are arranged, an exhaust duct (which includes, for example, a common duct and a branching duct branched from the common duct) which is not shown in the drawings may be provided and the branching duct may be connected onto a penetration hole 56 (to be described later) of the cap 5 of each battery module 10. Accordingly, even when a reactive gas blows out from the safety valve 25 of the battery cell 2 due to crushing or the like, the reactive gas may be discharged to the outside of the battery system 1.

The frame 4 and the cap 5, which serve as the first holding body, are fitted to each other so as to surround and hold the battery cell 2. Among these, the cap 5 is formed by injection-molding, for example, an insulating material such as plastic, rubber or the like.
As shown in FIG. 4, the cap 5 includes a concave portion 50 of which a surface facing the battery cell 2 is depressed, a fitting concave portion 51 which is fitted to a fitting convex portion 42 formed in a support pillar portion 41 of the frame 4 to be described later, a top panel 52 which corresponds to the bottom surface of the concave portion 50, and hole portions 53a and 53b and a penetration hole 56 which are formed in the top panel 52.
The top panel 52 is a portion which faces the top surface 20a of the battery cell 2 so as to come into close contact therewith while the battery cell 2 is fitted to the concave portion 50. Since the top panel 52 comes into close contact with the top surface 20a of the battery cell 2, it is possible to prevent, for example, an accident in which dust, dirt, or the like contaminate the electrode terminal which is formed in the top surface 20a. Here, the shape of the top panel 52 when seen from the upside (which is the positive side of the Z direction and in which the same applies to the following description) is substantially formed in a rectangular shape. However, the scope of application of the present invention is not limited to the shapes of the substantially rectangular top panel 52, a bottom portion 40, and the base portion 60 to be described later in the planar view. In order to arrange the plurality of battery modules 10 for the purpose of saving space, it is desirable that the outlines of the shapes of the top panel 52, the bottom portion 40, and the base portion 60 in the planar view have a plane shape in which the components are repeatedly overlapped in the planar view, for example, a substantially triangular shape, a substantially parallelogram shape, a substantially rectangular shape, a substantially regular hexagonal shape, or the like.
Furthermore, in the following description of the respective embodiments and modified examples, the description will be made while the long side direction of the top panel 52 is defined as the X direction and the short side direction thereof is defined as the Y direction.

The fitting concave portion 51 is formed in a portion which faces the support pillar portion 41 (see FIG. 5) of the frame 4 in the concave portion 50, and is fitted to the fitting convex portion 42 which is formed in the frame 4.
The hole portions 53a and 53b are formed so as to penetrate the substantially rectangular top panel 52 in the Z direction. Then, when the cap 5 is attached to the battery cell 2, the positive electrode terminal 21 is inserted through the hole portion 53a, and the front end of the positive electrode terminal 21 protrudes from the top panel 52. In the same way as the negative electrode terminal 22, when the cap 5 is attached to the battery cell 2, the negative electrode terminal 22 is inserted through the hole portion 53b, and the front end of the negative electrode terminal 22 protrudes from the top panel 52.
The penetration hole 56 is formed in the top panel 52 of the portion which faces the safety valve 25 in the battery cell 2. In the embodiment, the penetration hole 56 is formed at the center of the top panel 52. Then, when the safety valve 25 of the battery cell 2 is opened, a gas inside the container body 20 is discharged to the outside through the penetration hole 56, so that the internal pressure of the container body 20 is opened.

As shown in FIG. 5, the frame 4 includes a substantially rectangular bottom portion 40, support pillar portions 41 which respectively extend from the upside at four corners of the bottom portion 40, fitting convex portions 42 which are respectively formed in the upper ends of the extending support pillar portions 41, and fitting concave portions 43 which are respectively formed at four corners of the surface opposite to the direction in which the support pillar portion 41 extends in the bottom portion 40.
In the frame 4, the respective portions may be integrally formed by molding or the like, or a bottom portion which is formed as a plate member or a support pillar portion which is formed as a pillar member may be joined to each other. The material of the frame 4 is not particularly limited as long as the material has a certain degree of strength. However, when the frame 4 is formed of an insulating material, short-circuiting is difficult to occur between the frame and the battery cell 2. For this reason, it is desirable that the material of the frame 4 of the embodiment is formed of an insulating resin such as plastic.
The bottom portion 40 is a portion which faces the bottom surface 20b of the battery cell 2 and supports the battery cell 2. The bottom portion 40 of the embodiment is substantially formed in a flat plate shape and substantially has a rectangular shape when seen from the upside. A hole portion 40H, which is formed around the center when seen from the upside so that the hole portion penetrates the bottom portion 40, is formed in the bottom portion 40. Then, when the battery cell 2 is used while being accommodated inside the frame 4, heat which is generated in the battery cell 2 is radiated to the outside through the hole portion 40H. The shape, the position, and the number of the hole portions 40H formed in the bottom portion 40 are not particularly limited as long as the hole portion faces the bottom surface 20b of the battery cell 2. However, it is desirable that the hole portion is formed so as to not to overlap the CMU 3 in the Z direction when the CMU 3 is disposed in the second holding body 6 to be described later. Accordingly, the heat which is generated from the battery cell 2 may be effectively radiated without adversely affecting the CMU 3 due to the heat.

The arrangement and the number of the support pillar portions 41 are appropriately selected so that the support pillar portions are able to support the cap 5. Here, four support pillar portions 41 are installed in total so that each of them is installed for each corner of the substantially rectangular bottom portion 40. Then, one end of the support pillar portion 41 is continuous to the bottom portion 40 and extends in the substantially normal direction of the bottom portion 40 (the substantial Z direction). In the support pillar portion 41, the cross-sectional shape which is perpendicular to the axial direction (the Z direction) is substantially formed in an L-shape. Accordingly, the inner wall of the support pillar portion 41 (two side walls which form the inner angle substantially having an L-shape in the cross-sectional view) is disposed so as to face the battery cell 2.
The gap of the support pillar portions 41 are set so that an area surrounded by the inner walls of the four support pillar portions 41 becomes an opening portion through which the battery cell 2 is able to be inserted and removed. That is, when the battery cell 2 is inserted into the frame 4, the portion which faces the inner wall in the side surface 20c of the battery cell 2 comes into contact with the inner wall of the support pillar portion 41, so that the battery cell 2 is fixed and supported inside the frame 4.
The support pillar portion 41 of the embodiment serves as a spacer which forms a gap between the battery cells 2 in the plurality of arranged battery modules 10. The plate thickness of the support pillar portion 41 is determined, for example, so that the vicinities of the center portions of the adjacent battery cells 2 do not come into contact with each other when the vicinity of the center potion in the side surface 20c of the battery cell 2 expands with charging, discharging, and the like. Furthermore, a reinforcing bar may be installed between the adjacent support pillar portions 41 of the frame 4 so as to surround the side surface 20c of the battery cell 2 (the same applies to the embodiments and the modified example below). Specifically, the reinforcing bar is installed between the support pillar portions 41 so as to fix the vicinity of the center portion in the side surface 20c of the battery cell 2. Accordingly, the expansion of the vicinity of the center portion of the battery cell 2 is suppressed, thereby the contact between the adjacent battery cells 2 may be prevented.
As shown in FIG. 5, the fitting convex portion 42 is formed in the front end of each of the support pillar portions 41, and is fitted to the fitting concave portion 51 of the cap 5. The fitting concave portion 43 is fitted to a fitting convex portion 62 of the second holding body 6 when the second holding body 6 to be described later is connected to the frame 4. The shapes of the fitting concave portion 51, the fitting convex portion 42, the fitting concave portion 43, and the fitting convex portion 62 when seen from the upside are not limited to the rectangular shape as shown in the drawings, but may be other shapes such as a circular shape or an oval shape.

The second holding body 6 is attachably and detachably connected to the frame 4 at the opposite side to the cap 5 in the frame 4.
As shown in FIG. 5, the second holding body 6 includes a substantially rectangular base portion 60, spacer portions 61 which are respectively disposed at four corners of the base portion 60, and fitting convex portions 62 which are respectively formed in the front ends of the spacer portions 61. In the embodiment, the base portion 60, the spacer portions 61, and the fitting convex portions 62 which constitute the second holding body 6 are integrally molded. The material of the second holding body 6 is not particularly limited as long as the material has a certain extent of strength, but the second holding body is formed of an insulating resin material such as plastic in the embodiment. Further, a CMU holding body which is described in the second embodiment corresponds to the second holding body 6, and in a case where the CMU is accommodated in the second holding body 6, the configuration (a connection terminal 64, an interconnection 63, or the like) adopted as the CMU holding body shown in the second embodiment may be appropriately added.
The base portion 60 is a substantially plate-like member, and its shape from the upside and its outer dimensions are substantially the same as those of the bottom portion 40 and the top panel 52.
The arrangement or the number of the spacer portions 61 is appropriately selected so that a predetermined space is formed between the base portion 60 and the bottom portion 40 of the frame 4. In the embodiment, the spacer portion 61 is disposed at each corner of the base portion 60 and protrudes in the Z direction from the base portion 60. The spacer portion 61 is continuous to the base portion 60, and extends toward the frame 4 in the substantially normal direction of the base portion 60 (the substantial Z direction).
The fitting convex portion 62 is formed in the front end of each of the spacer portions 61 (the end portion on the positive side in the Z direction), and is attachably and detachably fitted to the fitting concave portion 43 of the frame 4. When the fitting convex portion 62 and the fitting concave portion 43 are fitted to each other, the second holding body 6 and the first holding body (the above-mentioned frame 4 and cap 5) are attachably and detachably connected to each other.

The battery module 10 and the battery system 1 according to the first embodiment described above may have the following function and effect.
First, since the battery cell 2 is surrounded and held by the first holding body, an impact which is caused by dropping when the battery cell 2 is suddenly dropped may be softened by the first holding body. Accordingly, it is possible to prevent the breakage of the battery cell 2 and thus to realize the battery module 10 and the battery system 1 which have excellent handling ability.
Second, since the second holding body 6 which is attachably and detachably connected to the first holding body is disposed so as to have the predetermined space, the predetermined space may be effectively used, so that the battery module 10 and the battery system 1 having high scalability may be realized. For example, in a case where the battery module 10 needs to be disposed on a high-temperature heat source, an air layer which is present in the predetermined space serves as a heat insulating layer. That is, air has a relatively low thermal conductivity, and the heat which is generated from the heat source is interrupted by the air layer which is present in the predetermined space. Accordingly, since the predetermined space may be used as the heat insulating space, the heat which is generated from the heat source may be prevented from being transmitted to the battery cell 2. Further, since the hole portion 40H is formed in the bottom portion 40 of the frame 4, the predetermined space may be used as the heat radiating space, so that the heat which is generated from the battery cell 2 may be radiated to the predetermined space.
Third, in a case where the CMU 3 which monitors the battery cell 2 is disposed on the second holding body 6, the predetermined space may be used as the CMU accommodating space, so that the battery module 10 and the battery system 1 which improve the efficiency of the space may be realized.

Furthermore, the hole portion 40H may not be necessarily provided, and may be appropriately omitted. Then, when the hole portion 40H is not formed, for example, a metal plate 7 to be described later is interposed between the bottom surface 20b of the battery cell 2 and the bottom portion 40, so that the heat which is generated from the battery cell 2 may be radiated to the outside through the metal plate 7.

Further, the material of at least the second holding body 6 may be formed of a heat insulating material or a heat insulating material such as glass wool may be formed so as to cover the second holding body 6. Accordingly, in particularly, when the battery module 10 is disposed on a high-temperature heat source, the battery cell 2 may be effectively protected from an effect of heat which is generated from the heat source.

Each of the battery cell 2, the cap 5, the frame 4, and the second holding body 6 may appropriately include the other configurations which will be newly described from the second embodiment to be described later. For example, the battery cell 2 includes a temperature measuring unit 23, a container potential terminal 24, and the like, and the cap 5 includes metal contact points 53c and 53d, input and output connectors 54 and 55, and an interconnection which electrically connects them. Accordingly, for example, a voltage across terminals of the battery cell 2 may be measured through the input and output connectors 54 and 55 by using a voltage measuring unit (not shown).

<Second embodiment>
Subsequently, a battery module and a battery system according to the second embodiment of the present invention will be described.
In the first embodiment described above, the predetermined space which is formed by the second holding body 6 may be used for various purposes. On the other hand, in the second embodiment, the battery cell and the CMU are formed so as to correspond one-to-one to each other, and the predetermined space is used as a space which accommodates the CMU.
That is, the second embodiment is different from the first embodiment in that the battery cell and the CMU correspond one-to-one to each other, the second holding body 6 is formed as a CMU holding body 6A which holds the CMU 3, a frame 4A is not provided with the hole portion 40H, each of the frame 4A, a cap 5A, and the CMU holding body 6A is provided with an interconnection group which is electrically connected to the CMU 3, and each of a battery cell 2A and the cap 5A is provided with a member which measures various measurement information items obtained from the battery cell 2A.
Furthermore, the same reference numerals will be given to the same components as those of the first embodiment, and the description thereof will be appropriately omitted.

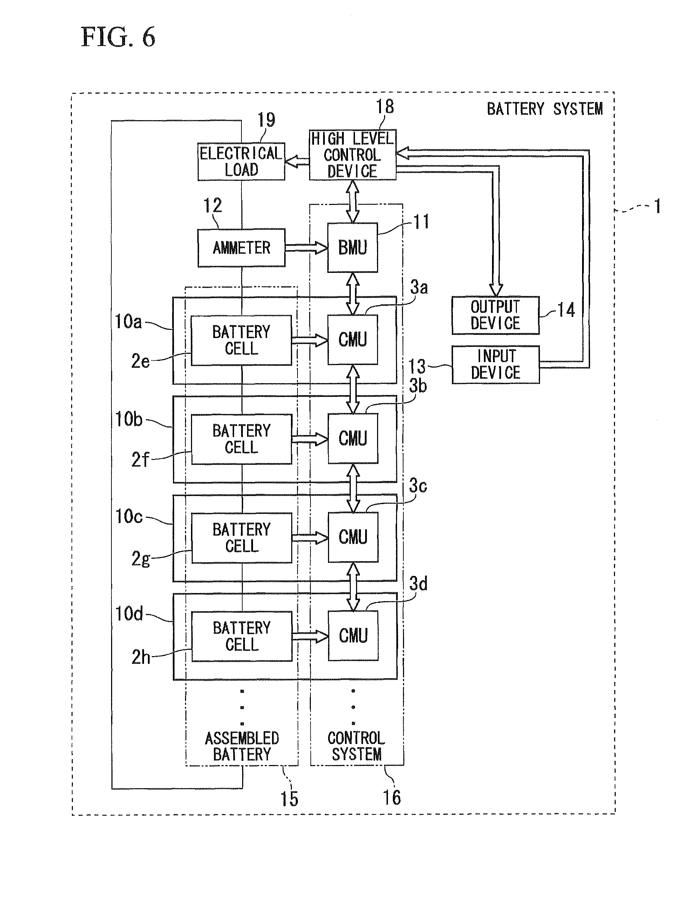

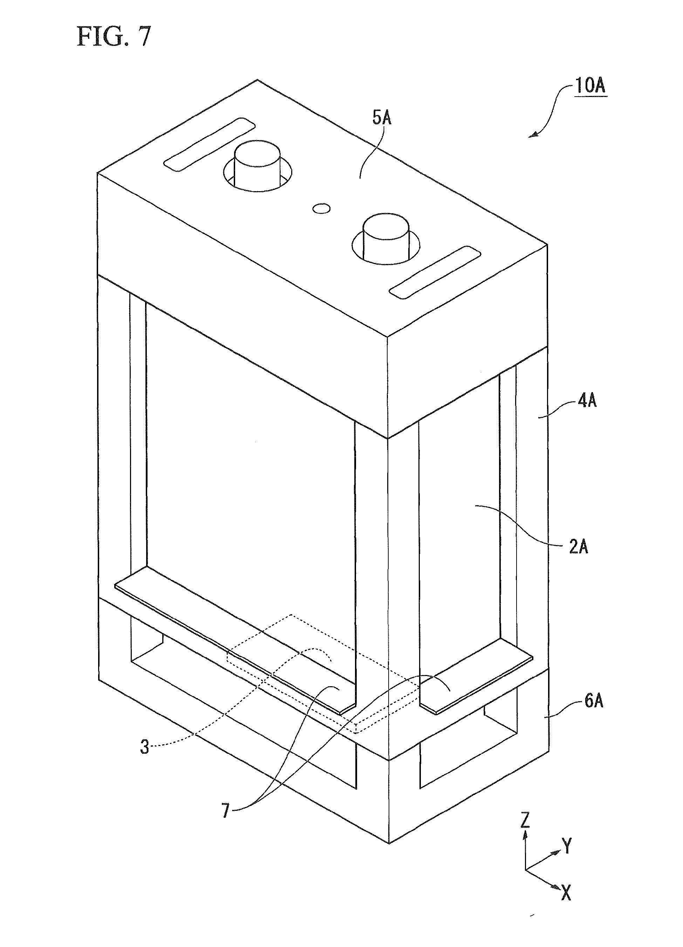

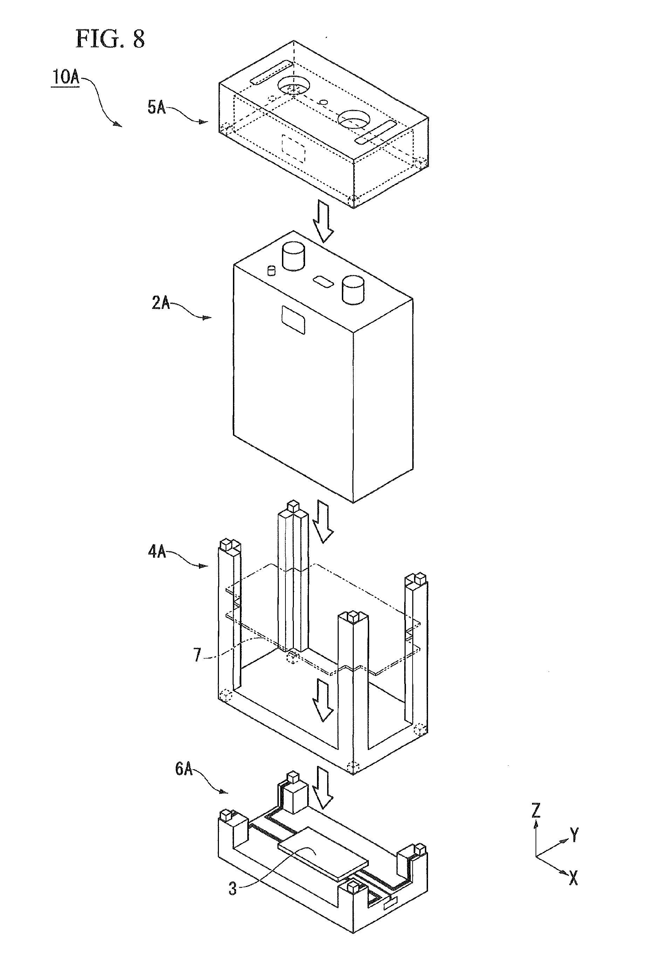

FIG. 6 is a configuration diagram illustrating an example of the battery system according to the second embodiment. Further, FIG. 7 is a perspective view illustrating an overview of the battery module which constitutes the battery system of the second embodiment, and FIG. 8 is an exploded perspective view illustrating a schematic configuration of the battery module which constitutes the battery system of the second embodiment.
The battery system 1 of the embodiment includes the assembled battery 15 which includes a plurality of battery cells 2A (battery cells 2e to 2h), the control system 16 which includes the CMU 3 and the BMU 11, the current sensor 12, the input device 13, the output device 14, the upper level control device 18, and the electrical load 19.
In the embodiment, a battery module 10A is configured by including the battery cell 2A and the CMU 3, and a plurality of the battery modules 10A are arranged in parallel as battery modules 10a to 10d. For example, the battery module 10a includes the battery cell 2e and a CMU 3a corresponds to the battery cell 2e with a one-to-one correspondence. Even in the battery modules 10b to 10d, as in the battery module 10a, the battery cell and the CMU are provided so as to correspond to one-to-one to each other.
The CMUs 3a to 3d respectively receive the measurement information of the battery cells 2e to 2h which are monitored objects from various sensors, and output the parameter information converted through the ADC to the BMU 11. In this way, the CMUs 3a to 3d monitor the statuses of the battery cells 2e to 2h which are monitored objects based on the measurement information from the various sensors for each battery cells 2e to 2h which are monitored objects. The plurality of CMUs 3a to 3d are connected to each other in series through a bus which transmits and receives data, and the most upstream CMU 3a is electrically connected to the BMU 11 to be described later.
Furthermore, in the specification, with regard to the other CMU 3 seen from the arbitrary CMU 3 connected as shown in FIG. 6, the other CMU 3 which is connected to the side of the BMU 11 is referred to as the upstream CMU, and the other CMU 3 which is connected to the opposite side to the BMU 11 is referred to as the downstream CMU.
The BMU 11 calculates the related information together with the CMUs 3 a to 3d based on the value of the current which flows to the assembled battery 15 and is measured by the current sensor 12 or the measurement information which is output from the various sensors.

Next, the battery module 10A of the embodiment will be described.

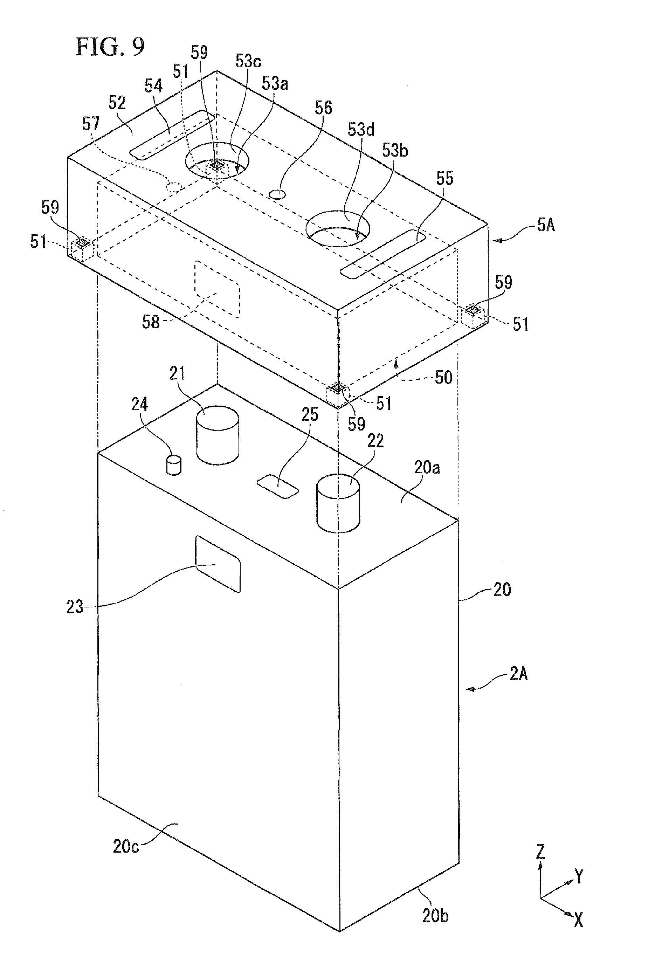

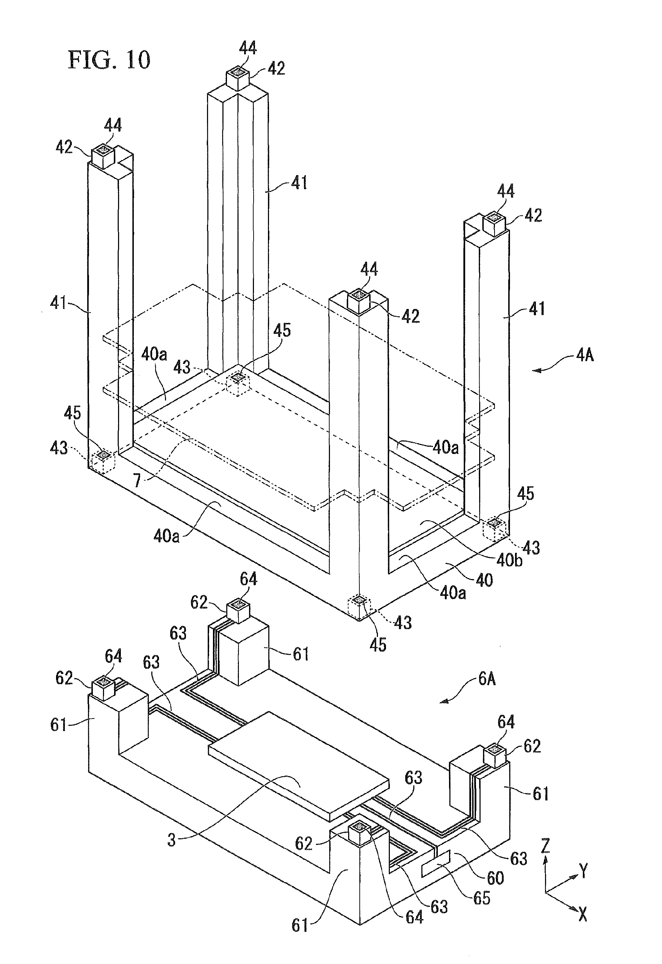

FIG. 7 is a perspective view illustrating an overview of the battery module which constitutes the battery system of the second embodiment, FIG. 8 is an exploded perspective view illustrating a schematic configuration of the battery module which constitutes the battery system of the second embodiment, FIG. 9 is an exploded perspective view illustrating a configuration of the battery cell and the cap in the battery module which constitutes the battery system of the second embodiment, and FIG. 10 is an exploded perspective view illustrating a configuration of the frame and the CMU holding body in the battery module which constitutes the battery system of the second embodiment.

As shown in FIGS. 7 and 8, the battery module 10Aof the embodiment includes the CMU holding body 6A, the frame 4A which is connected to the CMU holding body 6A at the upside of the CMU holding body 6A, the cap 5A which is connected to the frame 4A at the upside of the frame 4A, the battery cell 2A of which the top surface 20a is covered by the cap 5A and which is accommodated inside the frame 4A, and the CMU 3 which monitors the battery cell 2A and is held by the CMU holding body 6A. The battery module 10A may further include the metal plate 7 which is disposed between the bottom surface 20b of the battery cell 2A and a center portion 40b (to be described later) of the frame 4. The detail of the metal plate 7 will be described later.
In the embodiment, the frame 4A and the cap 5A serve as the cell holding body (the first holding body) which surrounds and holds the battery cell 2A. Further, the CMU holding body 6A serves as the monitoring unit holding body (the second holding body) which holds the CMU 3.

Hereinafter, each configuration of the battery cell 2A, the cap 5A, the frame 4A, the CMU holding body 6A, and the metal plate 7 which constitute the battery module 10A will be sequentially described, and the electrical connection relationship between the inside and the outside of the battery module 10A will be described later by using FIGS. 12, 13 and the like.
As shown in FIG. 9, the battery cell 2A of the embodiment includes the temperature measuring unit 23 and the container potential terminal 24 in addition to the configuration of the battery cell 2 shown in the first embodiment.
The temperature measuring unit 23 is configured by, for example, a temperature sensor or the like. The temperature measuring unit 23 is installed in the side surface 20c of the container body 20 and measure the temperature of the battery cell 2A.
The container potential terminal 24 is installed in the top surface 20a of the container body 20 and is electrically connected to the positive electrode terminal 21 through a resistor 26 shown in FIG. 12. The potential of the container potential terminal 24 is concerned with the potential of the container body 20, thus the potential of the container body 20 is measured based on the potential of the container potential terminal 24.
The cap 5A includes the metal contact points 53c and 53d which contact the electrode terminal of the battery cell 2A, the input and output connectors 54 and 55 which transmit and receive data to and from the outside, the container potential measuring terminal 57 which is formed so as to face the concave portion 50, the temperature measuring unit terminal 58, and a connection terminal 59 which is disposed inside the fitting concave portion 51 in addition to the configuration of the cap 5 shown in the first embodiment. Further, the cap 5A is provided with a first interconnection group which includes metal contact points 53c and 53d, terminals 57 and 58, the connection terminal 59, and an interconnection (not shown) which connects each of the input and output connectors 54 and 55, the metal contact point 53c, 53d, and the terminals 57 and 58 to the connection terminal 59.

The metal contact point 53c is installed inside the hole portion 53a and is electrically connected to the connection terminal 59 through an interconnection (not shown). Then, when the cap 5A is attached to the battery cell 2A, the metal contact point 53c is electrically connected to the positive electrode terminal 21. Further, as in the metal contact point 53c, the metal contact point 53d is electrically connected to the connection terminal 59 through an interconnection (not shown). Then, when the cap 5A is attached to the battery cell 2A, the metal contact point 53d is electrically connected to the negative electrode terminal 22.
The input and output connectors 54 and 55 are installed in an opposite surface of the top panel 52 facing the battery cell 2A. The input and output connectors 54 and 55 are electrically connected to the connection terminal 59 through, for example, an interconnection (not shown) which is disposed inside the member constituting the cap 5A or the surface of the cap 5A. In the example shown in FIG. 9, two connection terminals 59 which are disposed on the side of the positive electrode terminal 21 in relation to the penetration hole 56 of the cap 5A are electrically connected to the input and output connector 54, and two connection terminals 59 which are disposed on the side of the negative electrode terminal 22 are electrically connected to the input and output connector 55.
The container potential measuring terminal 57 is installed so as to face the concave portion 50 in the top panel 52 (in the embodiment, the surface which faces the top surface 20a of the battery cell 2A), and contacts the container potential terminal 24 of the battery cell 2A when the cap 5A is attached to the battery cell 2A, so that the electrical connection is ensured.
The temperature measuring unit terminal 58 is installed so as to face the concave portion 50 (the side facing the side surface 20c of the battery cell 2A), and contacts the output terminal of the temperature measuring unit 23 of the battery cell 2A when the cap 5A is attached to the battery cell 2A, so that the electrical connection is ensured.
The connection terminal 59 is installed in the bottom surface of the fitting concave portion 51 so that the surface of the terminal is exposed, and four connection terminals are respectively installed in four corners of the cap 5A in the embodiment. The connection terminal 59 is formed as a multi-pin terminal or the like which is able to transmit a plurality of electrical signals and is fittable to the other connection terminal corresponding to a subject connection object. The same applies to the connection terminals 44, 45, and 64 to be described later.
Furthermore, the container potential measuring terminal 57 and the temperature measuring unit terminal 58 are also electrically connected to any one of four connection terminals 59 through an interconnection (not shown). In the embodiment, for example, the terminals 57 and 58 are electrically connected to the connection terminal 59 which is the closest to the container potential terminal 24. Then, the measurement information which corresponds to the container potential, the temperature, and the like of the battery cell 2A is transmitted to the CMU 3 through the terminals 57 and 58.

As shown in FIG. 10, and sections (a) and (b) of FIG. 11, the frame 4A includes the substantially rectangular bottom portion 40, the support pillar portion 41 which extends upward from each of four corners of the bottom portion 40, the fitting convex portion 42 which is formed in each of the upper ends of the support pillar portions 41 in the extension direction, the fitting concave portion 43 which is formed in each of four corners of the surface opposite to the direction where the support pillar portion 41 extends in the bottom portion 40, the connection terminals 44 and 45 which are respectively disposed in the fitting convex portion 42 and the fitting concave portion 43, the penetration hole 46 which is formed inside the support pillar portion 41, and the interconnection 47 which is inserted into the penetration hole 46. Among these, the connection terminals 44 and 45 and the interconnection 47 are included in the first interconnection group.
The hole portion 40H shown in the first embodiment is not formed in the bottom portion 40 of the embodiment, and a peripheral edge portion 40a and a center portion 40b of the bottom portion 40 are configured with a step The center portion 40b is present at a position which protrudes to the positive side in the Z direction with respect to the peripheral edge portion 40a, and the peripheral edge portion 40a is spaced from the bottom surface 20b of the battery cell 2A by the step in relation to the center portion 40b.
The shape of the center portion 40b when seen from the upside in the Z direction is substantially the same as that of the battery cell 2A, and the center portion 40b forms a surface which faces the battery cell 2A. On the other hand, the peripheral edge portion 40a is a portion which is positioned outside the center portion 40b in the bottom portion 40, and becomes an area which is interposed between the adjacent support pillar portions 41 inside the frame 4A.
When the metal plate 7 to be described later is placed on the center portion 40b, a gap which corresponds to the step is formed between the peripheral edge portion 40a and the metal plate 7. The step between the peripheral edge portion 40a and the center portion 40b is set so as to be substantially equal to the plate thickness of the metal plate 7 or slightly smaller than the plate thickness of the metal plate 7. When the plurality of battery modules 10A are arranged so as to be adjacent to each other, a part of the metal plate 7 of the other adjacent battery module 10A is inserted into the gap between the peripheral edge portion 40a and the metal plate 7.

In the front end portion of each fitting convex portion 42 in the support pillar portion 41 (the surface which faces the cap 5A) is provided with the connection terminal 44. When the cap 5A and the frame 4A are fitted to each other, the connection terminal 44 is fitted to the connection terminal 59 of the cap 5A. Thus, the electrical connection is ensured.
The bottom surface of each of the fitting concave portions 43 (the surface which faces the CMU holding body 6A) is provided with the connection terminal 45. The connection terminal 45 is electrically connected to the connection terminal 64 of the CMU holding body 6A when the CMU holding body 6A and the frame 4A are fitted to each other. In the embodiment, the connection terminals 44 and 45 are disposed so that the connection terminals 44 and 45 overlap each other when the frame 4A is seen from the cap 5A in the planar view.
The penetration hole 46 is formed so as to penetrate the bottom portion 40 and the support pillar portion 41 in the Z direction, and serves as a space into which the interconnection 47 is inserted between the connection terminal 44 and the connection terminal 45. The interconnection 47 is disposed inside the penetration hole 46 and is electrically connected to the connection terminals 44 and 45. In this way, since the connection terminals 44 and 45 are disposed so as to overlap the axial direction of the support pillar portion 41, the penetration hole 46 may be easily formed.
Furthermore, the penetration hole 46 may not be formed in the support pillar portion 41. Then, a groove may be formed in the surface of the support pillar portion 41, and the interconnection 47 may be disposed so as to follow the inside of the groove, so that the interconnection 47 may be disposed inside the support pillar portion 41. When the support pillar portion 41 is not so thick in the X direction and the Y direction, the interconnection 47 may be easily disposed inside the support pillar portion 41 compared to the case where the penetration hole 46 is formed. In order to prevent the interconnection 47 from being deviated from the groove, for example, a resin material or the like may be charged into the groove having the interconnection 47 accommodated therein so as to seal the interconnection 47, and a lashing member such as a tape or a string may be wrapped around the support pillar portion 41 in the circumferential direction, thereby regulating the position of the interconnection 47.

The CMU holding body 6A includes the interconnection 63, the connection terminal 64 which is installed in the front end of each fitting convex portion 62, and an input and output connector 65 which inputs various data items to the CMU 3 and extracts various data items from the CMU 3 in addition to the configuration of the second holding body 6 shown in the first embodiment.
The CMU 3 is held on the surface which faces the bottom portion 40 of the frame 4A in the base portion 60 of the CMU holding body 6A. A concave portion, which has an outer shape slightly larger than the outer shape of the COM 3 on the above-described surface, may be formed in the base portion 60, so that the CMU 3 is accommodated in the concave portion. Accordingly, even when a vibration or the like is exerted when using the battery module 10A, the CMU 3 may be stably held by the CMU holding body 6A. Further, since the spacer portion 61 protrudes from the base portion 60 in the Z direction, a gap is formed between the bottom portion 40 of the frame 4A and the base portion 60, so that the CMU 3 is disposed at a position distant from the bottom portion 40 of the frame 4A. In this way, since the CMU holding body 6A holds the CMU 3 with a gap between the bottom portion 40 of the frame 4A and the CMU 3, heat is not easily transmitted from the battery cell 2A which is held by the frame 4A to the CMU 3. Accordingly, malfunction, damage, or the like of the CMU 3 which is caused by the heat generated by the battery cell 2A is prevented, which may contribute to the long lifespan of the CMU 3. Furthermore, the gap does not need to be a large gap, and the gap may be appropriately adjusted so as to be narrowed by, for example, interposing a heat insulating material between the bottom portion 40 of the frame 4A and the metal plate 7 or between the bottom portion 40 and the CMU 3. Accordingly, the height of the battery module 10A in the Z direction can be made small, so that the battery module 10A can be decreased in the size.

As shown in section (b) of FIG. 11, the connection terminal 64 is installed in the front end of each fitting convex portion 62 (the surface which faces the fitting concave portion 43 in the Z direction). Each connection terminal 64 is electrically connected to the connection terminal 45 of the corresponding frame 4A when the frame 4A and the CMU holding body 6A are fitted to each other.
Further, as shown in FIG. 10, the interconnection 63 is installed in the surfaces of the fitting convex portion 62, the spacer portion 61, and the base portion 60 from the connection terminal 64 to the CMU 3, so that the connection terminal 64 and the CMU 3 are electrically connected to each other through the interconnection 63. A groove may be formed in at least a part of the above-described surface of the fitting convex portion 62, the spacer portion 61, and the base portion 60, so that the interconnection 63 is accommodated in the groove. The interconnection 63 and the connection terminal 64 serve as a second interconnection group, and are electrically connected to the first interconnection group which is formed in the cell holding body.
The input and output connector 65 is used, for example, when history data such as parameter information of the battery cell 2A which is monitored by the CMU 3 is replaced. Here, the history data indicates the parameter information which is acquired in the past in the battery cell 2A connected to the CMU 3. For example, when the new battery cell stores the history data at the time of replacing the battery cell 2A by the new battery cell, the history data for the new battery cell is input to the CMU 3 through the input and output connector 65. Accordingly, since it is possible to easily replace the battery cell and input the history data of the new battery cell to the CMU 3 while the CMU holding body 6A and the frame 4A are fitted to each other, it is possible to improve the maintenance workability of the battery module 10A.
Further, for example, when the CMU 3 needs to be replaced due to the trouble which is generated in the CMU 3, the history data of the battery cell 2 may be input to the new CMU 3 through the input and output connector 65. More specifically, the CMU holding body 6A which holds the CMU 3 with a trouble is removed from the frame 4A, and the new CMU holding body 6 and the CMU 3 are prepared, so that each input and output connector 65 is connected to a PC or the like so as to input the history data to the CMU. Then, the new CMU 3 which receives the history data and the CMU holding body 6A are connected to the frame 4A. Accordingly, the history data of the battery cell 2A may be given to the new CMU 3, which is replaced, with simple operation.

Next, the specific method of transmitting and receiving the measurement information inside the battery module 10A and the parameter information corresponding to the measurement information, that is, the electrical connection relationship inside the battery module 10A of the embodiment will be described by referring to FIG. 12. The electrical connection relationship in the outside of the battery module 10A, that is, between the plurality of battery modules 10A, and between the plurality of battery modules 10A and the BMU 11 will be described later in detail.
As shown in FIG. 12, the CMU 3 includes a process control unit 30. The process control unit 30 is a process unit which performs a process necessary for monitoring the voltage, the temperature, or the like of the battery cell 2A corresponding to the monitored object. The process control unit 30 receives the measurement information which is output from the various sensors through the connection paths 36a to 36d to be described later. For example, the process control unit 30 acquires the measurement information which represents the value of the temperature of the battery cell 2A measured by the temperature measuring unit 23 installed in the battery cell 2A through the connection path 36a.
The specific configuration of the connection path 36a is as below. That is, as shown in FIGS. 9 and 10, the measurement information which represents the value of the temperature of the battery cell 2A is transmitted to the CMU 3 through a path which includes the temperature measuring unit 23, the first interconnection group, the second interconnection group, and the process control unit 30. More specifically, the measurement information is transmitted from the temperature measuring unit 23 of the battery cell 2A to the connection terminal 59 through an interconnection (not shown) installed in the terminal 58 and the cap 5A. Since the connection terminal 59 is connected to the connection terminal 44 of the frame 4A, the measurement information which represents the temperature of the battery cell 2A is transmitted to the connection terminal 64 of the CMU holding body 6A which is connected to the connection terminal 45 through the connection terminal 44, the interconnection 47, and the connection terminal 45. The measurement information, which represents the temperature of the battery cell 2A and is transmitted to the connection terminal 64, is transmitted to the process control unit 30 of the CMU 3 through the interconnection 63.

As described above, the process control unit 30 acquires the potential of the positive electrode terminal 21 with respect to the reference potential through the connection path 36b, acquires the potential of the negative electrode terminal 22 with respect to the reference potential through the connection path 36c, and acquires the potential of the container body 20 from the container potential terminal 24 through the connection path 36d. At this time, the connection path 36b includes the positive electrode terminal 21, the first interconnection group (the metal contact point 53c, the interconnection inside the cap 5A, the connection terminal 59, the connection terminal 44, the interconnection 47, and the connection terminal 45), the second interconnection group (the connection terminal 64 and the interconnection 63), and the process control unit 30. The connection path 36c includes the negative electrode terminal 22, the first interconnection group (the metal contact point 53d, the interconnection inside the cap 5A, the connection terminal 59, the connection terminal 44, the interconnection 47, and the connection terminal 45), the second interconnection group (the connection terminal 64 and the interconnection 63), and the process control unit 30. The connection path 36d includes the container potential terminal 24, the first interconnection group (the terminal 57, the interconnection inside the cap 5A, the connection terminal 59, the connection terminal 44, the interconnection 47, and the connection terminal 45), the second interconnection group (the connection terminal 64 and the interconnection 63), and the process control unit 30.
Furthermore, the process control unit 30 may include the ADC, and the method of converting the measurement information received from various sensors through the connection paths 36a to 36d into the parameter information is the same as described above.
Subsequently, the process control unit 30 transmits the parameter information to an input and output port 33 or 34 through a bus therein. The transmitted parameter information is further transmitted to an input and output connector 54 or 55 through the connection path 36e or the connection path 36f, and if necessary, the parameter information is transmitted to the BMU 11 through the other battery module 10A (to be described later). At this time, the connection path 36e includes the input and output port 33, the second interconnection group (the interconnection 63 and the connection terminal 64), the first interconnection group (the connection terminal 45, the interconnection 47, the connection terminal 44, the connection terminal 59, and the interconnection inside the cap 5A), and the input and output connector 54. The connection path 36f includes the input and output port 34, the second interconnection group (the interconnection 63 and the connection terminal 64), the first interconnection group (the connection terminal 45, the interconnection 47, the connection terminal 44, the connection terminal 59, and the interconnection inside the cap 5A), and the input and output connector 55.

Next, the electrical connection relationship between the plurality of arranged battery modules 10A (which include the battery modules 10a to 10d) and the BMU 11 will be described by referring to FIGS. 12 and section (a) of FIG. 13.
As shown in section (a) of FIG. 13, in this example, four battery modules 10a to 10d are arranged in one dimension. Here, the battery modules 10a to 10d are arranged in parallel in the short edge direction (the Y direction) of the battery module 10a which is seen from the upside in the planar view in the Z direction.
The battery modules 10a to 10d are connected to each other through a bus cable (a bus B1 and a bus B6) which is used to transmit and receive data by the input and output connectors 54a to 54d and 55a to 55d so that the CMUs 3a to 3d are connected in series to each other. Specifically, the input and output connector 54a of the battery module 10a is connected to the BMU 11. The input and output connector 55a of the battery module 10a is connected to the input and output connector 55b of the battery module 10b of the downstream (which is on the opposite side to the BMU 11 as based on the input and output connector 55a). The input and output connector 54b of the battery module 10b is connected to the input and output connector 54c of the downstream battery module 10c. The input and output connector 55c of the battery module 10c is connected to the input and output connector 55d of the most downstream battery module 10d. The input and output connector 54d of the battery module 10d is terminated.
In the battery modules 10a to 10d of the embodiment, the positive electrode terminal and the negative electrode terminal are connected to each other between the battery modules 10a to 10d so that the battery cells are connected in series to each other. Further, the positive electrode terminal of the battery module 10a and the negative electrode terminal of the battery module 10d are connected to the current sensor 12.

Furthermore, the process control unit 30 inside the CMU 3 is connected to the input and output ports 33 and 34 through a bus which transmits and receives data, but a configuration which includes the switching units 31 and 32 and the bus B7 to be described later is desirable.
The switching unit 31 is installed between the process control unit 30 and the input and output port 33. The switching unit 31 and the process control unit 30 are connected to each other through the bus B3 which transmits and receives data. The switching unit 31 and the input and output port 33 are connected to each other through the bus B2 which transmits and receives data. The switching unit 32 is installed between the process control unit 30 and the input and output port 34. The switching unit 32 and the process control unit 30 are connected to each other through the bus B4 which transmits and receives data. The switching unit 32 and the input and output port 34 are connected to each other through the bus B5 which transmits and receives data.
A bypass which does not pass through the process control unit 30 is formed between the switching unit 31 and the switching unit 32. The bypass is a path formed by the bus B7 which transmits and receives data.
The switching units 31 and 32 serve as a switch which is used to determine a path through which data flows inside the CMU 3 as a path where the data flows to the process control unit 30 through the buses B3 and B4 or a path where the data flows through the bus B7.
Here, in the connection example of the battery module 10A shown in section (a) of FIG. 13, with regard to the battery modules 10b to 10d, the parameter information is transmitted to the BMU 11 through the upstream battery module 10. For example, in a case where the CMU 3c of the battery module 10c transmits the parameter information to the BMU 11, the parameter information is transmitted to the BMU 11 through the process control units 30 of the CMU 3b and the CMU 3a.
At this time, as the initial setting of the switching units 31 and 32, it is assumed that each process control unit 30 is normally operated. For this reason, a path which passes through the process control unit 30 of each CMU 3 through the buses B3 and B4 is selected. However, for example, when several process control units 30 which are provided between the components are broken, the switching units 31 and 32 are appropriately controlled by the upstream or downstream CMU 3 or the BMU 11, so that a path which passes through the bus B7 is selected.

The specific control of switching the path of the switching unit 31 and the path of the switching unit 32 is performed, for example, as below. In the following example, for convenience of description, it is assumed that the CMU 3b (the process control unit 30) of the battery module 10b shown in section (a) of FIG. 13 is broken.
In the first example, the control of switching the path of the CMU (the CMU 3b) including the broken process control unit 30 is performed by the upstream CMU (here, the CMU 3a) with respect to the CMU 3b. When the broken CMU is the CMU 3a, the BMU 11 performs a switching control instead of the upstream CMU.
The switching units 31 and 32 are connected to a first switching control unit (not shown). The first switching control unit controls the switching unit 32 so that the path of the switching unit 32 is switched to the bus B7 coincident with the switching unit 31 receiving the switching signal.
For example, when the upstream CMU 3a transmits data to the CMU 3b and cannot receive data notifying the reception of the data from the CMU 3b within a predetermined time, the upstream CMU 3a determines that the process control unit 30 of the CMU 3b is broken. Then, the CMU 3 a transmits the switching signal to the CMU 3b, so that the switching unit 31 of the CMU 3b and the first switching control unit receive the switching signal. Then, the first switching control unit allows the switching unit 32 to switch the path to the bus B7 at the same time when the switching unit 31 receiving the switching signal switches the path to the bus B7. When the path is switched to the bus B7, the data which is transmitted from the CMU 3a to the CMU 3b is transmitted to the CMU 3c through the bus B7 without passing through the process control unit 30 of the CMU 3b. Further, the data which is transmitted from the CMU 3c to the CMU 3b is also transmitted to the CMU 3a through the bus B7 without passing through the process control unit 30 of the CMU 3b.

In the second example, the control of switching the path of the CMU (the CMU 3b) which includes the broken process control unit 30 is performed by the downstream CMU 3c with respect to the CMU 3b. The switching units 31 and 32 are connected to a second switching control unit (not shown). When the second switching control unit receives the switching signal from the downstream CMU 3c, the second switching control unit controls the switching unit 31 so that the path of the switching unit 31 is switched to the bus B7.
For example, when the CMU 3c cannot receive any data from the CMU 3b within a predetermined period, the CMU 3c determines that the CMU 3b is broken. The process control unit 30 of the CMU 3c transmits the switching signal to the upstream CMU 3b. The switching signal which is transmitted from the CMU 3c is transmitted to the switching unit 32 of the CMU 3b and the second switching control unit. Then, the second switching control unit allows the switching unit 31 to switch the path to the bus B7 at the same time when the switching unit 32 of the CMU 3b receiving the switching signal switches the path to the bus B7. When the path is switched to the bus B7, as in the first example, for example, the data which is transmitted to the CMU 3b is transmitted to the upstream CMU 3 a through the bus B7 without passing through the process control unit 30 of the CMU 3b.
Furthermore, the present invention is not limited to the above-described two examples, and for example, the CMU 3 or the BMU 11 which transmits the data may carry out the control of switching the path.

Next, the metal plate 7 which is disposed inside the battery module 10A will be described.
As shown in FIGS. 8, 10, and 11, the metal plate 7 is held between the bottom portion 40 of the frame 4A and the bottom surface 20b of the battery cell 2A so as to come into close contact with the bottom surface 20b of the battery cell 2A. As described above, since the bottom surface 20b of the battery cell 2A is insulated, the battery cell 2A and the metal plate 7 are prevented from being short-circuited to each other. In order to prevent the short-circuiting between the battery cell 2A and the metal plate 7, the surface of the container body 20 may be painted for the insulation. However, the present invention is not limited thereto, and one of the facing surfaces of the battery cell 2A and the metal plate 7 may be insulated by painting or the like.
The metal plate 7 serves as a heat radiating plate of the battery cell 2A, and is formed of a material with an excellent thermal conductivity like metal such as aluminum or an alloy, for example, a material which has a thermal conductivity higher than that of the frame 4 or has a thermal capacity smaller than that of the frame 4. In the embodiment, it is desirable to adopt an aluminum plate as the metal plate 7.
Further, the metal plate 7 may serve as an electromagnetic shield which protects the CMU 3. That is, the electromagnetic wave which is emitted from the battery cell 2A adversely affects the operation of the CMU 3. However, since the metal plate 7 is interposed between the battery cell 2A and the CMU 3, the electromagnetic wave which is emitted from the battery cell 2A is blocked by the metal plate 7. Thus, the malfunction of the CMU 3 can be suppressed.

As shown in sections (a) and (b) of FIG. 11, the metal plate 7 of the embodiment includes a base portion 7s, a first peripheral edge portion 7t, and a second peripheral edge portion 7u, and is integrally formed with the portions. The shape of the base portion 7s when seen from the upside is substantially the same as the outer shape of the battery cell 2A.
Here, in two adjacent support pillar portions 41, the surfaces facing each other in the long edge direction of the frame 4A (the X direction) with the peripheral edge portion 40a interposed between them when seen from the upside are defined as side surfaces 41a, and the surfaces facing each other in the short edge direction (the Y direction) are defined as side surfaces 41b. At this time, the length between the side surfaces 41a of the adjacent support pillar portions 41 is defined as L1, and the length between the side surfaces 41b of the adjacent support pillar portions 41 is defined as L2.
The first peripheral edge portion 7t is a portion which protrudes toward the outside of the frame 4A between the adjacent support pillar portions 41 in the direction parallel to the short edge direction of the frame 4A (the Y direction). The length of the first peripheral edge portion 7t in the X direction becomes equal to or shorter than L1 (for example, substantially equal to or slightly shorter than L1). Further, the length of the first peripheral edge portion 7t in the Y direction is set as a length in which the first peripheral edge portion 7t is able to reach the inside of the peripheral edge portion 40a of the other frame 4A between the adjacent frames 4A.
On the other hand, the second peripheral edge portion 7u is a portion which protrudes toward the outside of the frame 4A between the adjacent support pillar portions 41 in the direction parallel to the long edge direction of the frame 4A (the X direction). The length of the second peripheral edge portion 7u in the Y direction becomes equal to or shorter than L2 (for example, substantially equal to or slightly shorter than L2). Further, the length of the second peripheral edge portion 7u in the X direction is set as a length in which the second peripheral edge portion 7u is able to reach the inside of the peripheral edge portion 40a of the other frame 4A between the adjacent frames 4A.
The shape of the first peripheral edge portion 7t or the second peripheral edge portion 7u is not limited to the above-described example, and may be appropriately changed in accordance with the condition in design.

With regard to the first peripheral edge portion 7t of the metal plate 7, the vicinity of one front end portion is bent toward the downside (the negative side in the Z direction, and the same applies hereinafter) and the vicinity of the other front end portion is bent toward the upside in the direction in which the frame 4A protrudes outward.
For example, the front end of the first peripheral edge portion 7t of the metal plate 7 at the positive side in the Y direction is bent downward with a displacement slightly smaller than the plate thickness of the metal plate 7 in relation to the portion overlapping the center portion 40b of the bottom portion 40. On the other hand, the front end of the first peripheral edge portion 7t of the metal plate 7 at the negative side in the Y direction is bent upward with a displacement slightly smaller than the plate thickness of the metal plate 7 in relation to the portion overlapping the center portion 40b.
In the same way, even in the second peripheral edge portion 7u of the metal plate 7, the vicinity of one front end portion is bent downward and the vicinity of the other front end portion is bent upward.
Then, when the other battery module is disposed with respect to one battery module in the direction in which the metal plate 7 protrudes outward, the first peripheral edge portions 7t or the second peripheral edge portions 7u of the metal plates 7 contact each other. Then, in the plurality of arranged battery modules, the heat of the battery cell 2A is transmitted through the plurality of metal plates 7 which contact each other. Thus, the heat between the adjacent battery cells becomes uniform. Furthermore, the direction in which the metal plate 7 protrudes outward from the frame 4A may be one of the arrangement directions when there are two arrangement directions and may be one of the positive side and the negative side of one arrangement direction.

Next, referring to sections (b) and (c) of FIG. 13, the structural connection relationship of the plurality of arranged battery modules 10A will be described. Section (b) of FIG. 13 is a plan view illustrating a connection relationship of the metal plate of the arrangement example, and section (c) of FIG. 13 is a cross-sectional view taken along the line B-B' of section (b) of FIG. 13.
As shown in section (b) of FIG. 13, the first peripheral edge portion 7t, which protrudes outward from the battery cell 2a toward the adjacent battery module 10b in the metal plate 7a of the battery module 10a, overlaps one first peripheral edge portion 7t which protrudes outward from the battery cell 2b toward the battery module 10a in the metal plate 7b of the battery module 10b.
In the same way as the battery modules 10b and 10c and the battery modules 10c and 10d, the first peripheral edge portion 7t in the metal plate 7 of the battery module 10A overlaps the first peripheral edge portion 7t of the metal plate 7 of the other adjacent battery module 10A.
As described above, in the metal plate 7b, the front end of the first peripheral edge portion 7t which protrudes toward the metal plate 7a is bent downward, and the front end of the first peripheral edge portion 7t which protrudes toward the metal plate 7c is bent upward. As shown in section (c) of FIG. 13, when the connection portion of the metal plates 7a and 7b between the battery cells 2a and 2b is forcused, the front end side of the first peripheral edge portion 7t of the metal plate 7b is inserted between the first peripheral edge portion 7t of the metal plate 7a and the peripheral edge portion 40a of the frame 4a. The first peripheral edge portion 7t of the metal plate 7b is also slightly bent downward in relation to the center portion 40b of the frame 4b, and the first peripheral edge portion 7t of the metal plate 7a is pressed upward by the elastic reaction force. On the other hand, even the first peripheral edge portion 7t of the metal plate 7a is slightly bent upward by being pressed against the first peripheral edge portion 7t of the metal plate 7b. As a result, the first peripheral edge portion 7t of the metal plate 7b is pressed downward by the elastic reaction force. In this way, the respective first peripheral edge portions 7t of the metal plates 7a and 7b are pressed in the direction where they approach each other by their elastic reaction forces so as to come into close contact between the battery cells 2a and 2b.
In the same way, in the metal plates 7b and 7c or the metal plates 7c and 7d, the respective first peripheral edge portions 7t are also pressed in the direction in which they approach each other by their elastic reaction forces so as to come into close contact between the adjacent battery cells.

Furthermore, in a case of where the plurality of battery modules 10 are arranged in the long edge direction of the battery module 10 (the X direction) when seen from the upside, the second peripheral edge portion 7u which protrudes outward from the short edge of the frame 4A seen from the upside comes into close contact with the second peripheral edge portion 7u of the adjacent battery module 10. Further, when the plurality of battery modules 10 are arranged in two dimensions in the long edge direction and the short edge direction of the battery module 10 in the planar view, the first peripheral edge portions 7t of two adjacent battery modules 10 come into close contact with each other in the short edge direction, and the second peripheral edge portions 7u of two adjacent battery modules 10 come into close contact with each other in the long edge direction.

In the battery module 10 and the battery system 1 of the embodiment described above, the following various operations and effects may be obtained.
First, in a case where the CMU is provided for the cell group which includes a plurality of battery cells, it may be difficult to form the battery system which matches the required load. That is, in a system in which the number of the battery cells managed by the CMU installed for each cell group is set in advance, for example, a system in which each CMU manages four battery cells, the assembled battery needs to be formed by four, eight, and twelve battery cells which are provided by the unit of four.
In this case, for example, in the case of a configuration of a system in which ten battery cells are used at best, the assembled battery is formed by eight battery cells which does not provide sufficient electrical power or the assembled battery is formed by twelve battery cells which has poor cost performance.
On the other hand, in order to form the assembled battery by the appropriate total number of battery cells (in the above-described example, ten), at least one CMU manages two battery cells different from the other CMU. Accordingly, the one CMU needs to be separately designed, so that there is a possibility that the cost of the battery system may increase.

On the contrary, in the embodiment, the battery cell 2A and the CMU 3 which serve as the battery module 10A are installed so as to correspond one-to-one to each other, it is possible to decrease the number of factors which needs a change in the design of the CMU 3 when the number of the battery cells 2A is set different compared to the configuration in which the common CMU is installed for the plurality of battery cells. Accordingly, when the battery modules 10A are assembled as many as the number which corresponds to the required performance of the battery system 1, the battery system 1 which matches the required performance may be formed, so that the desired battery performance may be easily realized.
Since the battery cell 2A may be handled while being held by the cell holding body or the CMU 3 may be handled while being held by the CMU holding body 6A, the battery module 10A may be effectively assembled. Since the interconnection 47 is installed inside the support pillar portion 41 of the frame 4A, the interconnection 47 does not easily interfere with, for example, the battery cell 2A or the other battery module 10A. Accordingly, breaking or the like scarcely occurs in the interconnection 47, so that the workability in the arrangement of the plurality of battery modules 10A is improved.
Since the CMU holding body 6A and the cell holding body are integrated with each other, the plurality of battery modules 10A may be efficiently arranged, so that the work in the configuration of the battery system 1 may be efficiently carried out. Since the components such as the battery cell 2A, the CMU 3, the frame 4A, the cap 5A, and the CMU holding body 6A are independent from each other, the components may be individually handled or two or more components may be handled in the form of a combination. Accordingly, it is possible to realize the battery system in which a degree of freedom in the assembly sequence of the battery module 10A improves and the assembly is efficiently carried out.

In the battery modules 10a to 10d, the heat which is generated from the battery cells 2e to 2h is radiated through the metal plates 7a to 7d. Since the metal plates 7a to 7d come into close contact with each other, the heat may be satisfactorily transmitted between the metal plates 7a to 7d. Thus, the temperature of the battery cells 2e to 2h may become uniform. Since the temperatures of the respective battery cells 2A may become uniform, the operation conditions of the plurality of battery cells 2A may be set. Accordingly, it is possible to suppress a variation in the performance for each battery cell 2A due to a difference in the operation condition, and hence to easily obtain the battery system 1 with a desired battery performance. Further, it is possible to suppress a variation in the degradation status of the battery cell 2A due to a difference in the operation condition, and hence to reduce the frequency of the maintenance of the battery system 1.
Since the CMU holding body 6A holds the CMU 3 with a gap between the CMU 3 and the frame 4A, the heat is not easily transmitted from the battery cell 2A held by the cell holding body to the CMU 3. Since the CMU 3 is disposed below the battery cell 2A, the heat of the battery cell 2A is not easily transmitted to the CMU 3.
Since the metal plate 7 is interposed between the battery cell 2A and the CMU 3, the electromagnetic wave which is emitted from the battery cell 2A is blocked by the metal plate 7. As a result, the CMU 3 may be prevented from being adversely affected.
In this way, since the overheating of the CMU 3 due to the heat generated from the battery cell 2A is prevented and the electromagnetic wave emitted from the battery cell 2A is shielded, the malfunction or the short lifespan of the CMU 3 may be prevented.

Furthermore, the technical scope of the present invention is not limited to the above-described embodiments. Various modifications may be made without departing from the spirit of the present invention. For example, the frame may be formed so as to be divided, so that the frame holds the battery cell so as to hold the battery cell from the side thereof. Further, the CMU 3 which is held by the CMU holding body 6 may have a security function to be described later. Hereinafter, the modified examples of the battery module will be described.

### <Modified Example 1>

Section (a) of FIG. 14 is a plan view illustrating the frame and the metal plate of Modified Example 1, section (b) of FIG. 14 is a cross-sectional view taken along the line C-C' of section (a) of FIG. 14, and section (c) of FIG. 14 is a schematic diagram illustrating an arrangement example of the battery module of Modified Example 1.
Modified Example 1 is different from the second embodiment in that a step is not formed in a bottom portion 40B of a frame 4B, a subject fixed portion 48 to which a fixed portion 73 to be described later is fixed is provided, and the metal plate 7 includes a plurality of members, and the other configurations are the same as those of the second embodiment.
Accordingly, in the following description, the same reference numerals will be given to the same components of the second embodiment, and the description thereof will be appropriately omitted (the same applies to the other modified examples).

The metal plate 7B of Modified Example 1 includes a first metal plate 70, a second metal plate 71, and a third metal plate 72. That is, in the metal plate 7 of the second embodiment, the members which correspond to the first peripheral edge portion 7t and the second peripheral edge portion 7u are respectively formed separately from the second metal plate 71 and the third metal plate 72. The first to third metal plates 70 to 72 are formed of the same metal material, for example, aluminum, and but the present invention is not limited thereto. The first to third metal plates 70 to 72 may be formed of different materials or formed with different thicknesses.
The first metal plate 70 is installed in an area which overlaps the battery cell 2A and is included in the frame 4B when seen from the upside.
The second metal plate 71 is installed in an area which includes the outer area of the battery cell 2A inside the frame 4B and protrudes outward from an area along the long edge of the frame 4B to the outside of the frame 4B when seen from the upside.
The second metal plate 71 overlaps the respective first metal plates 70 of the adjacent battery modules 10B so that the second metal plate 71 is positioned at the upside in an outer area of the battery cell 2A. Then, two first penetration holes are formed in an area where the second metal plate 71 overlaps the first metal plate 70. On the other hand, in an area which overlaps the first metal plate 70 in the second metal plate 71, two second penetration holes corresponding to the first penetration holes are formed. In this way, the first penetration holes and the second penetration holes overlap each other in the Z direction.
Further, in the bottom portion 40B of the frame 4B, two subject fixed portions 48 are formed in a position where the first penetration hole and the second penetration hole overlap each other when seen from the upside. Then, the fixed portion 73 passes through the first penetration hole and the second penetration hole and is fixed to the subject fixed portion 48. Accordingly, the relative positional relationship between the first metal plate 70, the second metal plate 71, and the frame 4B is fixed.
The fixed portion 73 is, for example, a screw, and the subject fixed portion 48 is a screw hole which corresponds to the screw.

The third metal plate 72 is installed in an area which includes the outer area of the battery cell 2A inside the frame 4B and protrudes from an area along the short edge of the frame 4B toward the outside of the frame 4B when seen from the upside.
The third metal plate 72 overlaps the first metal plate 70 of the adjacent battery module 10B so as to be positioned at the upside of the third metal plate 72 in an outer area of the battery cell 2A. Then, two third penetration holes are formed in an area which overlaps the third metal plate 72 in the first metal plate 70. On the other hand, two fourth penetration holes which correspond to the third penetration holes are formed in an area which overlaps the first metal plate 70 in the third metal plate 72. In this way, the third penetration holes and the fourth penetration holes overlap each other in the Z direction.
Further, in the bottom portion 40B of the frame 4B, two subject fixed portions (not shown) are formed at a position where the third penetration hole and the fourth penetration hole overlap each other when seen from the upside. Then, as in the second metal plate 71, the fixed portion 74 passes through the third penetration hole and the fourth penetration hole and is fixed to the subject fixed portion. Accordingly, the relative positional relationship between the first metal plate 70, the third metal plate 72, and the frame 4B is fixed. The fixed portion 74 and the subject fixed portion (not shown) are the same as the fixed portion 73 and the subject fixed portion 48 and are, for example, a screw and a screw hole.
In Modified Example 1, the number of each of the first to fourth penetration holes, the fixed portions, and the subject fixed portions is two, and may be three or more if they may be fixed by the fixed portions in at least two positions.
In the arrangement example shown in section (c) of FIG. 14, the plurality of battery modules 10B are arranged in two dimensions in the long edge direction (the X direction) and the short edge direction (the Y direction) of the battery module 10B of Modified Example 1 when seen from the upside. In both two battery modules 10B which are adjacent to each other in the short edge direction, the second metal plate 71 is fixed by the fixed portion 73, and the second metal plate 71 is commonly used in two battery modules 10B. In both two battery modules 10B which are adjacent to each other in the long edge direction, the third metal plate 72 is fixed to the fixed portion 74 and is commonly used.

In the battery module 10B of Modified Example 1, in addition to the above-described effect of the second embodiment, the space can be saved by omitting the installation of the second metal plate 71 or the third metal plate 72 positioned at both ends of the plurality of arranged battery modules 10B.
Further, since the second metal plate 71 or the third metal plate 72 is fixed to the first metal plate 70 by the fixed portions 73 and 74, it is possible to form a heat transfer path between the first metal plates 70 of the adjacent battery modules 10B with high reliability. Further, since the relative position is fixed between the adjacent battery modules 10B, a positional gap between the battery modules 10B scarcely occurs. Accordingly, it is possible to assemble the battery module 10B with a satisfactory workability and arrange the battery modules 10B with a highly precise relative position. As a result, it is possible to realize the battery module and the battery system with excellent workability and reliability.

### <Modified Example 2>

Section (a) of FIG. 15 is an exploded perspective view illustrating the frame and the metal plate of the battery module of Modified Example 2, and section (b) of FIG. 15 is a cross-sectional view illustrating a portion which corresponds to the line D-D' of the plurality of arranged battery modules.
Modified Example 2 is different from the second embodiment in that a step is not formed in the bottom portion 40B of the frame 4B and the metal plate of the portion protruding toward the outside of the frame 4B is bent so as to be substantially perpendicular to the direction facing the side surface of the frame 4B, and the other configurations are the same as those of the second embodiment.

As shown in sections (a) and (b) of FIG. 15, a metal plate 7C of Modified Example 2 includes a base portion 70C, a first protrusion 71 C, and a second protrusion 72C. The base portion 70C corresponds to the base portion 7s shown in the second embodiment, the first protrusion 71 C corresponds to the first peripheral edge portion 7t, and the second protrusion 72C corresponds to the second peripheral edge portion 7u. The base portion 70C is a portion which overlaps the battery cell 2 when seen from the upside, and here it has a substantially rectangular shape when seen from the upside.
The first protrusion 71 C is a portion which protrudes from the base portion 70C toward the positive side and the negative side in the Y direction in a state where two long edges of the base portion 70C are set as base ends. In the first protrusion 71 C, the cross-section which is perpendicular to the long edge of the base portion 70C is substantially formed in an L-shape. Specifically, the first protrusion 71 C protrudes in the short edge direction of the base portion 70C (the Y direction) between the side surfaces 41a of the adjacent support pillar portions 41 in the long edge direction of the base portion 70C. The front end portion 73C of the first protrusion 71C is bent toward the outside of the bottom portion 40B when seen from the upside. Here, the front end portion is bent toward the downside (the negative side in the Z direction) so as to move away from the side surface of the bottom portion 40B as it moves toward the front end. The front end portion 73C serves as a plate spring.
The second protrusion 72C is the same as the first protrusion 71 C, and protrudes toward the positive side and the negative side in the X direction from the base portion 70C in a state where two short edges of the base portion 70C serve as base ends.
The second protrusion 72C protrudes in the long edge direction of the base portion 70C (the X direction) between the side surfaces 41b of the adjacent support pillar portions 41 in the short edge direction of the base portion 70C. The front end portion 74C of the second protrusion 72C is bent toward the side surface of the bottom portion 40B outside the bottom portion 40B when seen from the upside. Here, the front end portion is bent downward so as to move away from the side surface of the bottom portion 40B as it moves toward the front end.

In the arrangement example of section (b) of FIG. 15, the plurality of battery modules 10C are arranged in parallel in the short edge direction of the base portion 70C. The front end portion 73C of the metal plate 7C comes into plane contact with the front end portion 73C of the metal plate 7C of the other adjacent battery module 10C. As described above, the front end of the front end portion 73C of the metal plate 7C moves away from the side surface of the bottom portion 40B. Here, the gap between the battery modules 10C is managed so that the front end portion 73C is bent toward the side surface of the bottom portion 40B in the arranged state. The front end portions 73C which contact each other come into close contact with each other due to the respective elastic reaction forces which are exerted in the direction in which they move close to each other.
When the plurality of battery modules 10C are arranged in the long edge direction of the base portion 70C, the front end portions 74C of the second protrusions 72C come into close contact with each other at the adjacent battery modules 10C. The same applies to the case where the plurality of battery modules 10C are arranged in two dimensions.

In the battery module 10C of Modified Example 2 with the above-described configuration, the front end portions 73C of the metal plates 7C of the adjacent battery modules 10C may come into close contact with each other with a simple configuration in addition to the effect of the second embodiment. Accordingly, the temperatures of the plurality of metal plates 7C may become uniform by simplifying the structure in which the metal plates 7C come into close contact with each other, thereby realizing the battery module and the battery system with excellent efficiency by a simpler configuration.

### <Modified Example 3>

Section (a) of FIG. 16 is a plan view illustrating the frame and the metal plate of Modified Example 3, section (b) of FIG. 16 is a cross-sectional view illustrating the battery module of the portion which corresponds to the line E-E' of section (a) of FIG. 16, and section (c) of FIG. 16 is an development diagram illustrating the metal plate of Modified Example 3.
Modified Example 3 is different from the second embodiment in that a metal plate 7D is held between the battery cell 2A and a support pillar portion 41 D, a bottom portion 40D of a frame 4D is not provided with a step and is provided with a concave portion accommodating the battery cell 2A, and the bottom portion 40D of the frame 4D and the support pillar portion 4 1 D are separately formed, and the shape of the support pillar portion 41D is different, and the other configurations are the same as those of the

### second embodiment.

As shown in sections (a) and (b) of FIGS. 16, the bottom portion 40D of the frame 4D of Modified Example 3 is substantially formed in a rectangular shape when seen from the upside. Further, a concave portion 45D is formed in a portion which overlaps the battery cell 2A in the bottom portion 40D when seen from the upside. In Modified Example 3, the battery cell 2A is disposed inside the concave portion 45D, and the battery cell 2A is held by the cell holding body. The shape of the support pillar portion 41D when seen from the upside is substantially formed in a rectangular shape. Then, the support pillar portion 41 D when seen from the upside is installed at each of four corners of the substantially rectangular bottom portion 40D so that the metal plate 7D to be described later is inserted between the battery cell 2A and the support pillar portion 41D. Four support pillar portions 41D are positioned at the inside (the center side of the bottom portion 40D) in relation to the outer periphery of the bottom portion 40D when seen from the upside.
The metal plate 7D is disposed so as to face the side surface 20c of the battery cell 2A shown in FIG. 9. Here, two metal plates 7D are installed so as to face a pair of the side surfaces 20c including the long edge of the battery cell 2A when seen from the upside. The metal plate 7D is fixed to the support pillar portions 41D which are positioned at both sides in the long edge direction of the bottom portion 40D by fixing means such as a screw or an adhesive.
The metal plate 7D protrudes toward the outside of the frame 4D in the long edge direction of the bottom portion 40D. When the plurality of battery modules 10D are arranged in the long edge direction, the protruding portions of the metal plates 7D contact each other.
As shown in section (c) of FIG. 16, the metal plate 7D of Modified Example 3 includes a rectangular portion which includes one end portion 71D and the other end portion 72D and an insertion portion 73D which protrudes from the opposite side to the other end portion 72D in one end portion 71D and contacts the inner wall of the concave portion 45D. In the metal plate 7D, for example, a plate-like metal plate which serves as a base material is perforated, so that one end portion 71 D, the other end portion 72D, and the insertion portion 73D are integrally formed with each other.
One end portion 71D of the metal plate 7D is supported by the support pillar portion 41D through the above-described fixing means. The metal plate 7D is substantially bent in a U-shape with respect to the folding point P serving as a base point so that the boundary line between one end portion 71D and the other end portion 72D, that is, the folding point P is positioned at the upside. Then, the other end portion 72D of the metal plate 7D is folded back toward the center side of the bottom portion 40D so as to contact the side surface 20c of the battery cell 2A. The metal plate 7D serves as a plate spring. That is, when the end portion (the lower end) of the battery cell 2A is accommodated in the concave portion 45D, the metal plate 7D is deformed. Accordingly, the battery cell 2A and the metal plate 7D come into close contact with each other by the elastic reaction force of the metal plate 7D.

In the battery module 10D of Modified Example 3 with the above-described configuration, in addition to the effect of the second embodiment, the heat of the battery cell 2A can be effectively transferred to the metal plate 7D since the metal plate 7D serves as a plate spring and comes into close contact with the battery cell 2A. Since the metal plate 7D is folded back from the folding point P so as to face the side surface 20c of the battery cell 2A, the upper portion of the battery cell 2A (the opposite side to the bottom surface 20b) and the metal plate 7D may come into contact with each other. In general, although the temperature of the upper portion of the battery cell 2A easily increases compared to the lower portion thereof, the metal plate 7D may contact the upper portion of the battery cell 2A. As a result, the heat of the battery cell 2A may be effectively radiated. As a result, the battery module and the battery system with an excellent heat radiating performance may be realized.
Further, since the support pillar portion 41 D is positioned at the inside of the bottom portion 40D in relation to the outer periphery when seen from the upside, a gap is formed between the support pillar portions 41D of the adjacent battery modules 10C. Since the gap serves as a ventilating path and the metal plate 7D is disposed so as to face the ventilating path, the heat which is transferred to the metal plate 7D may be effectively radiated.
Further, the ventilating path serves as a cooling air path between the adjacent battery cells 2A. Accordingly, in addition to the heat radiating effect of the metal plate 7D, the heat which is generated from each battery cell 2A can be further efficiently radiated.

### <Modified Example 4>

Section (a) of FIG. 17 is a plan view illustrating the frame and the metal plate of Modified Example 4, and section (b) of FIG. 17 is a cross-sectional view illustrating the battery module of the portion which corresponds to the line F-F' of section (a) of FIG. 17.
Modified Example 4 is different from the second embodiment in that a metal plate 7E covers a part of the bottom portion 40D of the frame 4D, the bottom portion 40D of the frame 4D is not provided with a step and is provided with a concave portion accommodating the battery cell 2A, the bottom portion 40D of the frame 4D and the support pillar portion 41D are separately formed, the shape of the support pillar portion 41 is different, a base portion 60E of a CMU holding body 6E decreases in the size, and the base portion 60E and a spacer portion 61E are separately formed, and the other configurations are the same as those of the second embodiment.
As shown in sections (a) and (b) of FIG. 17, in a battery module 10E of Modified Example 4, the CMU holding body 6E is included inside the frame 4D when seen from the upside. The shape of the base portion 60E is substantially formed in a rectangular shape when seen from the upside, and here, the spacer portion 61E is installed near four comers of the base portion 60E. The spacer portion 61 E is attachably and detachably connected to the bottom portion 40D through the fitting of concave-convex portions.
The metal plate 7E is installed along the bottom surface and the inner wall of the concave portion 45D of the frame 4D, and covers a part of the bottom portion 40D excluding the support pillar portion 41D. That is, the metal plate 7E is bent so as to cover the upper surface (the surface which faces the cap 5) of the bottom portion 40D including the concave portion 45D and cover a part of the lower surface of the bottom portion 40D (the surface opposite to the upper surface in the Z direction) along the side surface α of the bottom portion 40D. The portion which follows the side surface α of the bottom portion 40D in the metal plate 7E contacts the side surface α of the metal plate 7E of the other adjacent battery module 10E when the plurality of battery modules 10E are arranged. It is desirable that the metal plate 7E covers the lower surface of the bottom portion 40D in the range in which the metal plate 7E does not face the CMU 3. This is because the malfunction of the CMU 3 due to the heat radiated from the metal plate 7E may be suppressed.

In the battery module 10E of Modified Example 4 with the above-described configuration, the effect of the second embodiment is obtained. In addition to this, since the side surface α of the bottom portion 40D protrudes toward the outside of the battery module 10E in relation to the side surface β of the CMU holding body 6E when seen from the upside, when the plurality of battery modules 10E are arranged, a void is formed between the CMU holding bodies 6E of the adjacent battery modules 10E. This void serves as the ventilating path and the metal plate 7E of the portion which covers the lower surface of the bottom portion 40D faces the ventilating path, so that the heat of the metal plate 7E may be effectively radiated. As a result, the battery module and the battery system with an excellent heat radiating performance may be realized.

### <Modified Example 5>

Modified Example 5 will be described by referring to FIG. 18. In Modified Example 5, an example will be described in which the CMU 3 and the BMU 11 have a security function and prevent an operation in which a legitimate CMU is illegally separated and a false CMU (hereinafter, referred to as a "false CMU") is mounted on the battery module. Here, the "false CMU" indicates a CMU other than the CMU which is manufactured by the legitimate manufacturer based on the specification of the battery system or the battery cell.
Modified Example 5 is different from the second embodiment in that an authentication code performing authentication with respect to the BMU 11 is stored in the volatile memory 35 electrically connected to the CMU 3 and the CMU 3 and the BMU 11 control the driving of the battery system 1 based on the authentication code, and the other configurations are the same as those of the second embodiment.
As shown in FIG. 18, the volatile memory 35 (for example, DRAM) is installed inside the CMU 3. The volatile memory 35 is electrically connected to the process control unit 30 of the CMU 3, and stores the authentication code therein. The authentication code is confidential authentication information which is used for the mutual authentication between the CMU 3 and the BMU 11, and for example, digital data formed by a predetermined number of bits is exemplified.
The recording of the authentication code as the initial setting is performed, for example, as below. That is, after the battery module 10 is completely assembled and the CMU 3 and the BMU 11 are electrically connected to each other, the authentication code is stored in both a memory (not shown) of the BMU 11 and the volatile memory 35 through, for example, an external PC or the like.
As described above, the CMU 3 obtains electrical power which is necessary for the driving from the battery cell 2 mounted on the battery module 10. For this reason, in a case where the CMU 3 is removed from the battery module 10 or the frame 4 or the cap 5 is removed in a case where the electrical connection between the CMU 3 and the battery cell 2 is disconnected, the supply of the electrical power from the battery cell 2 to the CMU 3 is stopped, so that the authentication code stored in the volatile memory 35 disappears.

Next, the authentication process which is performed between the CMU 3 and the BMU 11 will be described.
When the battery system 1 is driven, the CMU 3 and the BMU 11 start the authentication process. Specifically, in regard to the process control unit 30 of the CMU 3, the BMU 11 performs instructions of transmitting the authentication code stored in the volatile memory 35 to the BMU 11. On the other hand, the CMU 3 receives the command from the BMU 11, and transmits the authentication code stored in the volatile memory 35 to the BMU 11.
Then, the BMU 11 performs the authentication process by comparing the authentication code received from the CMU 3 with the authentication code stored in the memory of the BMU 11. Furthermore, the communication path between the BMU 11 and each CMU 3 is the same as that of the second embodiment.
The specific authentication process is classified into, for example, the following three cases, and the CMU 3 and the BMU 11 control the driving of the battery system 1 by performing the authentication process in each case.

### <Case 1>

The case 1 is a case in which the legitimate CMU 3 is mounted on the battery module 10 and the CMU 3 is not removed from the CMU holding body 6. In this case, since electrical power is continuously supplied from the battery cell 2 to the CMU 3 from the above-described initial setting, the authentication code is stored in the volatile memory 35 of the CMU 3.
Accordingly, the CMU 3 and the BMU 11 determines that the CMU 3 is a legitimate one and is not illegally removed, and starts the operations illustrated in the above respective embodiments.

### <Case 2>

The case 2 is a case in which the legitimate CMU 3 is mounted on the battery module 10, but the CMU 3 is removed from the CMU holding body 6. In this case, the authentication code stored in the volatile memory 35 disappears.
Accordingly, the data which is read out from the volatile memory 35 by the process control unit 30 of the CMU 3 and is transmitted to the BMU 11 is data (hereinafter, referred to as "error data") which is different from the authentication code. Then, the BMU 11 which receives the error data from the CMU 3 performs a control so that an alarm is output from the output device 14 through the upper level control device 18. Furthermore, the BMU 11 may perform a process which restricts the output of the assembled battery 15 in addition to or instead of the alarm.

### <Case 3>

The case 3 is a case in which the false CMU is mounted on the battery module 10. In this case, there is an extremely high possibility that data different from the authentication code is stored in the volatile memory 35 of the CMU 3.
Accordingly, there is an extremely low possibility that some data which may be stored in the volatile memory 35 is equal to the authentication code, and the BMU 11 performs a control so that an alarm is output from the output device 14 through the upper level control device 18. Furthermore, the BMU 11 may perform a process of restricting the output of the assembled battery 15 in addition to or instead of the alarm. Further, since the false CMU may not include the volatile memory 35 in some cases, the BMU 11 may perform a control in the same as the above-described even in a case where the authentication code is not received from the CMU 3 within a predetermined time.

In the battery system 1 of Modified Example 5 with the above-described configuration, it is possible to realize the battery system which further ensures the safety by effectively preventing the disassembly of the battery module 10 or the replacement of the false CMU in addition to the same effect as that of the second embodiment.
It is needless to say that Modified Example 1 to Modified Example 5 may be combined with different configurations illustrated in the embodiments so as to form the battery system without departing from the spirit of the present invention.
For example, the function of the ventilating path of the support pillar portion 41 D illustrated in Modified Example 3 may be applied to the other embodiments and modified examples. In this case, the support pillar portion may be separately formed as in Modified Example 3, and a part of the support pillar portion may be notched so as to form the ventilating path.

### Industrial Applicability

The present invention relates to a battery module including: a battery cell having an electrode terminal; a first holding body, which surrounds and holds the battery cell, having a hole portion to pass through the electrode terminal ; and a second holding body that is attachably and detachably connected to the first holding body with a predetermined space at the opposite side to the electrode terminal of the battery cell. According to the present invention, the battery cell may be effectively protected by reducing an impact which is caused by an unexpected drop using the first holding body.

### Reference Signs List

- 1:: battery system
- 2, 2a to 2h:: battery cell
- 4, 4A, 4B, 4D, 4a to 4c:: frame (cell holding body)
- 5, 5A:: cap (cell holding body)
- 6:: second holding body
- 6A, 6E:: CMU holding body
- 7, 7B, 7C, 7D, 7E, 7a to 7d:: metal plate
- 10, 10A, 10B to 10E, 10a to 10d:: battery module
- 11:: BMU
- 12:: current sensor
- 13:: input device
- 14:: output device
- 15:: assembled battery
- 16:: control system
- 17:: user interface
- 18:: upper level control device
- 19:: electrical load
- 20:: container body
- 20a:: top surface
- 20b:: bottom surface
- 20c:: side surface
- 21:: positive electrode terminal (electrode terminal)
- 22:: negative electrode terminal (electrode terminal)
- 23:: temperature measuring unit
- 24:: container potential terminal
- 25:: safety valve
- 35:: volatile memory
- 40, 40B, 40D, 40E:: bottom portion
- 40a:: peripheral edge portion
- 40b:: center portion
- 41, 41D:: support pillar portion
- 42:: fitting convex portion
- 43:: fitting concave portion
- 44, 45:: connection terminal
- 45D:: concave portion
- 46:: penetration hole
- 47:: interconnection
- 50:: concave portion
- 51:: fitting concave portion
- 52:: top panel
- 53a, 53b:: hole portion
- 54, 54a to 54d, 55, 55a to 55d, 65:: input and output connector
- 56:: penetration hole
- 57, 58:: terminal
- 59:: connection terminal
- 60, 60E:: base portion
- 61, 61E:: spacer portion
- 62:: fitting convex portion
- 63:: interconnection
- 64:: connection terminal
- 70:: first metal plate
- 70C:: base portion
- 71:: second metal plate
- 71C:: first protrusion
- 71D:: one end portion
- 72:: third metal plate
- 72C:: second protrusion
- 72D:: other end portion
- 73:: fixed portion
- 73C:: front end portion
- 74:: fixed portion
- 74C:: front end portion
- B1 to B7:: bus

## Claims

1. A battery module comprising:
a battery cell having an electrode terminal;
a first holding body, which surrounds and holds the battery cell, having a hole portion to pass through the electrode terminal; and
a second holding body attachably and detachably connected to the first holding body with a predetermined space at the opposite side to the electrode terminal of the battery cell.

2. The battery module according to claim 1, further comprising:
a monitoring unit corresponding to the battery cell with a one-to-one correspondence and to monitor the battery cell,
wherein the first holding body is provided with a measuring device that measures measurement information measured from the battery cell and a first interconnection group that is electrically connected to the measuring device, and
wherein the second holding body holds the monitoring unit and is provided with a second interconnection group that is electrically connected to the first interconnection group and the monitoring unit.

3. A battery system comprising:
battery modules according to claim 1 or 2 which are arranged,
a metal plate, which is disposed in the inside of the first holding body of each of the battery modules, contacted with the battery cell, wherein at least a part of the metal plate protrudes outward from the battery module, and
wherein parts of the metal plate, which protrude outward, contact each other between the adjacent battery modules.

4. The battery system according to claim 3,
wherein each of the monitoring units includes a control unit that acquires the measurement information and a switching unit that is connected to the control unit, and
wherein the switching unit determines whether information, which corresponds to the measurement information transmitted from one of the adjacent battery modules, is transmitted to the other of the adjacent battery modules through the control unit or is transmitted to the other of the adjacent battery modules without using the control unit.

5. The battery system according to claim 3 or 4, further comprising:
a managing unit that is electrically connected to the monitoring unit,
wherein the monitoring unit, which includes a volatile memory to store an authentication code and which transmits the authentication code to the managing unit after the monitoring unit is electrically connected to the managing unit, and
wherein the managing unit carries out an authentication process for the monitoring unit based on the authentication code received from the monitoring unit.

## Amended claims

### Amended claims under Art. 19.1 PCT

**1.** A battery module comprising:
a battery cell having an electrode terminal;
a first holding body, which surrounds and holds the battery cell, having a hole portion to pass through the electrode terminal and a bottom portion to support the battery cell; and
a second holding body attachably and detachably connected to the first holding body with a predetermined space between the second holding body and the bottom portion, at the opposite side to the electrode terminal of the battery cell.

**2.** The battery module according to claim 1, further comprising:
a monitoring unit corresponding to the battery cell with a one-to-one correspondence and to monitor the battery cell,
wherein the first holding body is provided with a measuring device that measures measurement information measured from the battery cell and a first interconnection group that is electrically connected to the measuring device, and
wherein the second holding body holds the monitoring unit and is provided with a second interconnection group that is electrically connected to the first interconnection group and the monitoring unit.

**3.** A battery system comprising:
battery modules according to claim 1 or 2 which are arranged,
a metal plate, which is disposed in the inside of the first holding body of each of the battery modules, contacted with the battery cell, wherein at least a part of the metal plate protrudes outward from the battery module, and
wherein parts of the metal plates, which protrude outward, contact each other between the adjacent battery modules.

**4.** The battery system according to claim 3,
wherein the battery module includes a monitoring unit that monitors the battery cell of the battery module,
wherein each of the monitoring units includes a control unit that acquires the measurement information and a switching unit that is connected to the control unit, and
wherein the switching unit determines whether information, which corresponds to the measurement information transmitted from one of the adjacent battery modules, is transmitted to the other of the adjacent battery modules through the control unit or is transmitted to the other of the adjacent battery modules without using the control unit.

**5.** The battery system according to claim 3 or 4, further comprising:
wherein the battery module includes a monitoring unit that monitors the battery_ cell of the battery module,
a managing unit that is electrically connected to the monitoring unit,
wherein the monitoring unit, which includes a volatile memory to store a authentication code, and which transmits the authentication code to the managing unit after the monitoring unit is electrically connected to the managing unit, and
wherein the managing unit carries out an authentication process for the monitoring unit based on the authentication code received from the monitoring unit.

Statement under Art. 19.1 PCT
Claim 1 is amended to "a first holding body which surrounds and holds the battery cell, wherein a hole portion through which the electrode terminal passes and a bottom portion which supports the battery cell are formed in the first holding body" and "a second holding body that is attachably and detachably connected to the first holding body with a predetermined space between the second holding body and the bottom portion at the opposite side to the electrode terminal of the battery cell".

This amendment of Claim 1 is based on the paragraphs [0021] to [0023] of the original specification.

The amended claim 1 include "a first holding body which surrounds and holds the battery cell, a hole portion through which the electrode terminal passes and a bottom portion which supports the battery cell being formed in the first holding body" and "a second holding body that is attachably and detachably connected to the first holding body with a predetermined space between the second holding body and the bottom portion at the opposite side to the electrode terminal of the battery cell".

This battery module has a predetermined separate from the space of the battery cell. In this way, it is possible for a battery module and a battery system having high scalability to be realized. Furthermore, the predetermined space may be used as the heat radiating space, a heat insulating layer, and the CMU accommodating space or the like.

Claim 4 is amended to "the battery module includes a monitoring unit that monitors the battery cell of the battery module". Claim 5 is amended similar to Claim 4. These amendments are based on paragraph [0014] in the original specification and FIG.1 of the original.

Claims 2 and 3 are not amended.
